# FASCICULE DE BREVET EUROPEEN

(11) **EP 2 102 791 B1**
(45) Date de publication et mention de la délivrance du brevet: **07.11.2012**
(21) Numéro de dépôt: 08701216.7
(22) Date de dépôt: 03.01.2008
(51) Int. Cl.: G06K 9/00

(54) **PROCEDE ET DISPOSITIF DE RECONNAISSANCE D'UN INDIVIDU**
VERFAHREN UND VORRICHTUNG ZUR ERKENNUNG EINES INDIVIDUUMS
METHOD AND DEVICE FOR RECOGNISING AN INDIVIDUAL

(30) Priorité: 05.01.2007 FR 0752540
(43) Date de publication de la demande: 23.09.2009
(73) Titulaire: Commissariat à l'Énergie Atomique et aux Énergies Alternatives, 75015 Paris (FR)
(72) Inventeur: PERRUCHOT, François, F-38000 Grenoble (FR); ROUZAUD, André, F-38170 Seyssinet (FR)
(74) Mandataire: Ilgart, Jean-Christophe
(86) Numéro de dépôt international: PCT/EP2008/050034
(87) Numéro de publication internationale: WO 2008/084009

(56) Documents cités:
- FR-A1- 2 674 051
- FR-A1- 2 736 179
- US-A1- 2005 259 850

## Description

### DOMAINE TECHNIQUE

La présente invention est relative à un procédé et un dispositif de reconnaissance par identification biométrique. Le dispositif est destiné à être utilisé dans des domaines où un haut niveau de sécurité est recherché afin de lutter contre des tentatives de fraude et où l'identification certaine de l'individu est requise. Parmi les dispositifs de reconnaissance biométriques existants, les plus utilisés sont les dispositifs de reconnaissance d'empreinte digitale parce qu'ils sont compacts et de faible coût. Mais d'autres dispositifs existent comme par exemple les dispositifs de reconnaissance de la paume de la main. La présente invention n'est donc pas limitée aux dispositifs de reconnaissance d'individus à partir de leur empreinte digitale.

### ÉTAT DE LA TECHNIQUE ANTÉRIEURE

Un dispositif de reconnaissance d'individu à partir d'empreinte digitale comporte généralement un capteur avec un réseau d'éléments sensibles permettant d'établir une image de l'empreinte digitale d'un doigt posé sur une zone de contact qui est associée au capteur.

Les capteurs peuvent être par exemple des capteurs optiques, des capteurs capacitifs, des capteurs thermiques, des capteurs à ultrasons. Chaque élément sensible du capteur permet alors de mesurer les propriétés locales de réflexion de la lumière, d'impédance de surface, de conductivité thermique ou de réflexion des ultrasons d'un doigt posé en contact. On peut par exemple se référer au document [1] dont les références complètes se trouvent en fin de description et qui passe en revue les différents capteurs existants.

Récemment des capteurs basés sur la mesure de la pression exercée par l'épiderme ont également été proposés. Il s'agit par exemple de capteurs piézoélectriques ou, avec le développement des technologies MEM (technologies utilisant la microélectromécanique), de capteurs de contact ou de capteurs de pression à mesure capacitive comme décrit dans le document [2] dont les références complètes se trouvent en fin de description. Chaque élément sensible de ces capteurs est sensible à la pression locale exercée par le doigt en contact.

Tous ces capteurs permettent, à partir des mesures locales, d'établir une image de l'empreinte du doigt en différenciant les crêtes et les vallées de la peau exposée face au capteur. Mais les techniques connues de capture d'empreinte digitale ne permettent pas de détecter si le doigt est vivant. Des faux doigts ou leurres, c'est-à-dire, des doigts artificiels ou des doigts morts détachés de leur corps peuvent tromper le capteur, la fraude étant pratiquement impossible à détecter dans la mesure où ces faux doigts présentent un motif plausible d'empreinte digitale.

Des techniques ont déjà été proposées pour essayer de distinguer un faux doigt d'un vrai doigt vivant mais elles de donnement pas satisfaction pour plusieurs raisons.

Le document [3] dont les références complètes se trouvent en fin de description, propose d'utiliser un capteur d'empreinte digitale et de plus, des moyens de mesure de paramètres physiologiques comme par exemple la pulsation cardiaque, le pourcentage d'oxygénation du sang, des signaux électrocardiographiques, des caractéristiques spectrales de tissus humains, le débit sanguin, l'hématocrite, l'analyse biochimique de tissus, la pléthymographie électrique. Les moyens de mesure de paramètres physiologiques reposent sur des dispositifs additionnels, peu pratiques à utiliser, coûteux et encombrants.

Le document [4] dont les références complètes se trouvent en fin de description, propose de d'utiliser en sus de moyens de reconnaissance de l'empreinte d'un doigt, des moyens optiques de détection du flux sanguin qui permettent de déterminer s'il y a tentative de fraude ou non. Les moyens de détection du flux sanguin sont intégrés au capteur des moyens de reconnaissance de l'empreinte. Le coût d'un tel dispositif est supérieur à celui d'un utilisateur qui utiliserait uniquement un capteur. De plus, ce dispositif de reconnaissance n'est pas tout à fait satisfaisant à cause de la fiabilité de la reconnaissance. En effet, il est possible de tromper le dispositif de reconnaissance de l'empreinte en recouvrant un vrai doigt vivant d'une fine membrane dotée d'une empreinte digitale artificielle.

En fait cet inconvénient existe dans tous les dispositifs de reconnaissance basés sur la température, le pourcentage d'oxygénation du sang et de manière générale tous les paramètres physiologiques reposant sur des mesures non directement liées à des propriétés de surface de la peau.

Le document [5] dont les références complètes se trouvent en fin de description, propose un dispositif permettant de mesurer les propriétés de transmission de la peau dans le domaine des radiofréquences. Ici encore cette solution peut être contournée en utilisant un matériau artificiel imitant les propriétés de transmission de la peau.

Plus récemment des dispositifs de reconnaissance d'individu à l'aide d'une empreinte digitale, ont été développés. Ils utilisent les propriétés de transpiration de la peau. On peut par exemple se référer aux documents [6] et [7] dont les références complètes se trouvent en fin de description. Dans un mode de réalisation, le capteur employé est de type capteur d'impédance de surface à mesure capacitive (appelé aussi capteur capacitif). Il possède une face de contact sur laquelle est appliqué le doigt qui est rigide. L'image de l'empreinte digitale d'un doigt qui transpire est différente de celle d'un doigt sec car la sueur a une constante diélectrique très élevée. L'image de l'empreinte digitale capturée est d'autant plus sombre au niveau de crêtes que le doigt transpire. La sueur émise par les pores de ces crêtes se diffuse le long des crêtes et donne une image plus intense que celle obtenue en l'absence de sueur. En capturant des images des empreintes digitales d'un même doigt à des instants différents et en analysant leur évolution temporelle, on peut déterminer si le doigt est un vrai doigt vivant ou est un leurre. En effet, un doigt vivant va transpirer au cours du temps et il va donner une image de plus en plus saturée. Les informations d'impédances locales au contact sont employées à la fois pour obtenir l'empreinte digitale et les caractéristiques de la sudation.

Dans cette méthode, on commence par prendre au moins deux images du doigt espacées dans le temps. A partir de la dernière image, on détermine les lignes matérialisant le sommet des crêtes. La dernière image prise permet de déterminer plus facilement ces lignes car elle est plus saturée. Ces lignes sont utilisées comme filtre d'analyse pour transformer une image de l'empreinte qui est bidimensionnelle ou 2D, c'est-à-dire une image d'une surface, en une image unidimensionnelle ou 1D, c'est à dire une image d'une ligne. Cette transformation permet d'obtenir un ensemble de critères caractéristiques du phénomène de sudation. Un de ces critères est la présence d'une fréquence caractéristique dans la transformée de Fourier de la courbe obtenue, cette fréquence spatiale étant associée à la distance moyenne entre pores qui est typiquement de l'ordre de 0,5 millimètre. Un autre critère est l'évolution des minima et maxima associés à cette fréquence provenant de la migration de la sueur le long de ces crêtes. Cet autre critère caractérise donc la diffusion de la sueur le long des lignes de crêtes.

Cette méthode qui peut sembler au premier abord prometteuse souffre toutefois de plusieurs inconvénients. Les informations obtenues à partir d'une unique mesure faite par le capteur d'impédance de surface caractérisent à la fois l'empreinte et la sudation ce qui rend l'interprétation difficile.

Une telle méthode manque de fiabilité car l'information caractérisant la sudation peut être perturbée voire trompée par des modifications temporelles de la pression exercée par le doigt sur le capteur. Enfin le traitement ne peut être fait en temps réel car c'est toujours la dernière image qui est utilisée pour réaliser l'analyse.

La demande de brevet français FR 2 736 179 décrit un dispositif de reconnaissance d'individu avec un capteur doté d'une zone de contact sur laquelle une partie susceptible d'être celle de l'individu à reconnaître est à appliquer, des moyens de mesure reliés au capteur pour délivrer des informations relatives aux forces locales de contact exercées par la partie appliquée sur la zone de contact et relatives à la température de la partie.

### EXPOSÉ DE L'INVENTION

La présente invention a pour but de proposer un dispositif de reconnaissance d'un individu ne présentant pas les limitations et difficultés ci-dessus.

Un but est en particulier de proposer un dispositif de reconnaissance d'individu qui soit à la fois compact, bon marché et susceptible de reconnaître de manière très fiable l'individu en distinguant si une zone exposée au dispositif et qui devrait caractériser l'individu est réellement la zone de l'individu ou un leurre.

Un autre but de l'invention est en particulier de proposer un dispositif de reconnaissance d'un individu qui fonctionne en temps réel.

Un autre but de l'invention est de proposer un dispositif de reconnaissance d'un individu qui fonctionne avec rapidité en utilisant très peu de points pour l'analyse.

Pour y parvenir, la présente invention propose un dispositif de reconnaissance d'un individu selon la revendication 1. Il comporte un capteur comportant un réseau d'éléments sensibles doté d'une zone de contact sur laquelle une partie susceptible d'être celle de l'individu à reconnaître est à appliquer, des moyens de mesure reliés aux éléments sensibles pour délivrer des informations relatives aux forces locales de contact exercées par la partie appliquée sur la zone de contact et des moyens de traitement reliés au capteur pour déterminer à partir des forces locales de contact une caractéristique morphologique de l'individu à reconnaître. Dans ce dispositif, les moyens de mesure délivrent aussi des information relatives à au moins une autre grandeur physique liée au contact correspondant à la pression globale qui s'exerce sur la zone de contact ou aux impédances locales au niveau de la zone de contact et en ce que les moyens de traitement déterminent à partir de cette autre grandeur physique une caractéristique physiologique de l'individu à reconnaître.

De préférence, la caractéristique morphologique est l'empreinte digitale de l'individu.

La caractéristique physiologique peut être la pulsation cardiaque ou une caractérisation de la sudation.

Les éléments sensibles comportent de préférence chacun une membrane souple dont la déformation est mesurée par détection capacitive.

Un élément sensible peut comporter une paire d'électrodes, utilisée pour la détection capacitive, l'une étant fixe et l'autre étant mobile solidaire de la membrane souple.

L'une des électrodes de la paire peut être subdivisée en deux sous-électrodes, ce qui permet de mesurer avec une très bonne sensibilité l'impédance locale au niveau de la zone de contact. Les sous-électrodes peuvent être inter-digitées.

Un élément sensible peut comporter une ou plusieurs jauges piézorésistives.

Un élément sensible peut aussi comporter deux électrodes solidaires de la membrane souple.

Selon un premier mode de réalisation, les moyens de mesure peuvent comporter :
- un premier moyen de conversion relié par une connexion électrique aux éléments sensibles et apte à délivrer les informations relatives aux forces locales de contact,
- au moins un second moyen de conversion relié aux éléments sensibles soit par l'intermédiaire de ladite connexion électrique soit directement par une autre connexion électrique et apte à délivrer les informations relatives à l'autre grandeur physique liée au contact.

Selon un deuxième mode dé réalisation, les moyens de mesure peuvent comporter :
des moyens de multiplexage reliés aux éléments sensibles,
un premier moyen de conversion relié aux moyens de multiplexage apte à délivrer les informations relatives aux forces locales de contact,
au moins un second moyen de conversion apte à délivrer les informations relatives à l'autre grandeur physique liée au contact, et
des moyens de commande des moyens de multiplexage pour relier les éléments sensibles au premier moyen de conversion ou au second moyen de conversion.

Le second moyen de conversion peut être confondu avec le premier moyen de conversion.

Dans un mode de réalisation, le premier moyen de conversion peut comporter un convertisseur pour chaque élément sensible, apte à mesurer une variation de capacité due au déplacement de la membrane.

Lorsque l'une des électrodes est formée de deux sous-électrodes, ces dernières, reliées entre elles, sont connectées au premier moyen de conversion.

Lorsque l'autre grandeur physique correspond aux impédances locales au contact et que l'électrode mobile est unitaire, le second moyen de conversion peut comporter un convertisseur pour chaque élément sensible apte à mesurer une variation d'impédance entre l'électrode mobile et la masse.

Lorsque l'autre grandeur physique correspond aux impédances locales au contact, et que l'électrode mobile est subdivisée en deux sous-électrodes, le second moyen de conversion peut comporter un convertisseur pour chaque élément sensible apte à mesurer une variation d'impédance entre les deux sous-électrodes.

Lorsque l'autre grandeur physique correspond aux impédances locales au contact et que les électrodes de la paire sont unitaires, le second moyen de conversion peut comporter un convertisseur coopérant avec deux éléments sensibles voisins apte à mesurer une variation d'impédance entre les électrodes mobiles des deux éléments sensibles voisins.

Lorsque l'autre grandeur physique correspond à la pression globale, le second moyen de conversion peut comporter un convertisseur pour l'ensemble des éléments sensibles ou pour un groupe d'éléments sensibles, ce convertisseur étant apte à mesurer une variation de capacité globale due au déplacement de la membrane correspondant à l'ensemble des éléments sensible ou au groupe d'éléments sensibles.

En variante, le premier moyen de conversion peut comporter un convertisseur pour un groupe d'éléments sensibles coopérant avec un multiplexeur local inséré entre le groupe d'éléments sensibles et le convertisseur, ce convertisseur étant apte à mesurer une variation de capacité due au déplacement de la membrane correspondant à chaque élément sensible du groupe.

En variante, lorsque l'autre grandeur physique correspond aux impédances locales au contact, le second moyen de conversion peut comporter un convertisseur pour un groupe d'éléments sensibles coopérant avec un multiplexeur local inséré entre le groupe d'éléments sensibles et le convertisseur, ce convertisseur étant apte à mesurer une variation d'impédance au niveau de chaque élément sensible du groupe.

Le second moyen de conversion apte à mesurer les impédances locales au contact peut être confondu avec le premier moyen de conversion, ce qui permet de réduire à la fois les coûts et le volume.

Les moyens de multiplexage peuvent comporter à la fois des interrupteurs et des inverseurs.

La mesure des forces locales permet d'établir une cartographie bidimensionnelle des forces locales, cette cartographie peut servir de filtre de mesure pour sélectionner des éléments sensibles utiles à prendre en compte pour la mesure de l'autre grandeur physique. Cela permet d'augmenter la vitesse de fonctionnement du dispositif de reconnaissance d'individu.

La présente invention concerne également un procédé de reconnaissance d'un individu à l'aide d'un capteur doté d'un réseau d'éléments sensibles coopérant avec une zone de contact pour une partie susceptible d'être une partie de l'individu à reconnaître selon la revendication 23. Il comporte les étapes suivantes :
mesure à l'aide du réseau d'éléments sensibles des forces locales de contact s'exerçant lors du contact avec la partie, pour établir une cartographie bidimensionnelle des forces locales de contact et utilisation de la cartographie pour déterminer une image de la partie de l'individu à reconnaître,
mesure à l'aide du réseau d'éléments sensibles des impédances locales au contact s'exerçant lors du contact avec la partie, pour établir une cartographie des impédances locales et utilisation de la cartographie pour déterminer des caractéristiques de sudation de la partie en contact avec la zone de contact
et/ou mesure à l'aide du réseau d'éléments sensibles de l'intégrale des forces locales de contact pour obtenir une intégrale de la pression et utilisation de l'intégrale de la pression pour déterminer une pulsation cardiaque,
utilisation de l'image de la partie pour détecter si elle correspond à celle de l'individu à reconnaître,
utilisation des caractéristiques de sudation et/ou de la pulsation cardiaque pour détecter s'il y a fraude au niveau de la partie en contact.

Le procédé peut consister à utiliser les caractéristiques de sudation et/ou de la pulsation cardiaque pour confirmer l'identité de l'individu déterminée à partir de l'image.

Le procédé peut consister à corriger la cartographie des impédances locales au contact à l'aide de la cartographie bidimensionnelle des forces locales de contact, notamment dans le cas où le capteur possède une surface élastique.

La cartographie des impédances locales peut être une cartographie bidimensionnelle.

De la même manière, l'intégrale de la pression peut être une intégrale bidimensionnelle.

Pour augmenter la vitesse de traitement dans le procédé, il est possible de sélectionner à l'aide de la cartographie bidimensionnelle des forces locales de contact des éléments sensibles utiles qui permettent de déterminer la cartographie des impédances locales, cette cartographie étant une cartographie unidimensionnelle.

Dans le même but, il est possible de sélectionner à l'aide de la cartographie bidimensionnelle des forces locales de contact des éléments sensibles utiles qui permettent d'obtenir l'intégrale de la pression, cette intégrale étant une intégrale unidimensionnelle.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
la figure 1 montre une coupe d'un dispositif de reconnaissance d'individu selon l'invention ;
les figures 2A, 2B montrent en coupe et en vue de dessus un mode de réalisation d'un élément sensible du capteur dont est doté le dispositif de l'invention ;
les figures 3A, 3B montrent en coupe et en vue de dessus un autre mode de réalisation d'un élément sensible du capteur dont est doté le dispositif de l'invention ;
les figures 4A, 4B, 4C montrent trois variantes du procédé de reconnaissance d'individu selon l'invention ;
les figures 5A à 5N montrent différents branchements entre les éléments sensibles du capteur et les moyens de conversion selon le type de mesure réalisé ;
la figure 6 illustre l'intérêt de filtrer avec la cartographie des forces locales de contact la cartographie des impédances locales et l'intégrale de la pression.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

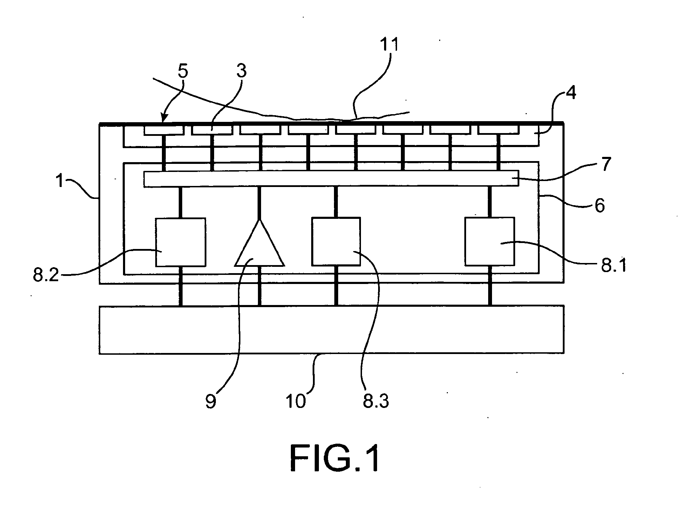

On va se référer à la figure 1 qui montre un exemple de dispositif de reconnaissance d'un individu conforme à l'invention. Ce dispositif comporte au moins un capteur 1 comportant une pluralité d'éléments sensibles 3 au contact arrangés en réseau 4 et contribuant à délimiter une zone de contact 5 sus-jacente. Ces éléments sensibles 3 coopèrent avec des moyens de mesure 6 englobant des moyens de multiplexage 7, un premier moyen de conversion 8.1, au moins un second moyen de conversion 8.2, 8.3 et des moyens de commande 9 des moyens de multiplexage 7. Les moyens de multiplexage 7 sont reliés d'un part aux éléments sensibles 3 et d'autre part aux moyens de conversions 8.1, 8.2, 8.3 et aussi bien sûr aux moyens de commande 9. Par le suite on va nommer le second moyen de conversion, celui référencé 8.2 qui correspond à la mesure de l'impédance locale et l'autre second moyen de conversion celui référencé 8.3 qui correspond à la mesure de la pression globale. Le second moyen de conversion peut être confondu avec le premier moyen de conversion 8.1. L'autre second moyen de conversion 8.3 est optionnel mais, s'il est présent, il est distinct du premier moyen de conversion 8.1. Le capteur 1 comporte au moins deux modes d'acquisition distincts. Ainsi, le capteur 1 est destiné à mesurer au moins deux grandeurs physiques liées au contact, ce contact étant réalisé par une partie 11 appliquée sur la zone de contact 5. Cette partie 11 devrait être celle de l'individu à reconnaître. Le dispositif de reconnaissance de l'invention va pouvoir distinguer si cette partie 11 est un leurre ou non et donc s'il y a fraude ou non. Par leurre on entend une zone morte, par exemple un doigt coupé, ou une zone artificielle par exemple un moulage de doigt dont la surface imite le motif et le relief des empreintes digitales. Cette partie 11 peut être avantageusement un doigt mais cela n'est pas limitatif. On pourrait envisager que cela soit la paume de la main ou autre. Par la suite, on considérera qu'il s'agit d'un doigt sans que cela bien sûr soit limitatif.

Parmi ces deux grandeurs physiques l'une d'elle correspond aux forces locales de contact. Une autre grandeur physique correspond aux impédances locales au contact ou bien à la pression globale résultant du contact. Le terme locale signifie que la grandeur mesurée est acquise de manière distincte pour chaque élément sensible 3 du capteur 1 ou éventuellement pour un groupe de deux éléments sensibles voisins. Ce terme de local s'oppose au terme global qui indique que la grandeur mesurée concerne les éléments sensibles pris dans leur ensemble ou en groupe.

Le dispositif selon l'invention permet de caractériser simultanément au moins une caractéristique physiologique, telle que la sudation et/ou la pulsation cardiaque en plus d'une caractéristique morphologique, telle que l'empreinte digitale de l'individu à reconnaître.

Les moyens de mesure 6 coopèrent avec des moyens de traitement 10 reliés au capteur 1 destinés à déterminer à partir des mesures effectuées par les moyens de mesure 6 au moins la caractéristique morphologique de la partie 11 appliquée sur la zone de contact 5 et également une caractéristique physiologique de l'individu. Dans le cas où la partie 11 de l'individu est un doigt, la caractéristique morphologique est une empreinte digitale. Dans un cas plus général où une autre partie de peau est exposée, par exemple la paume de la main, la caractéristique est une empreinte de la partie de la peau exposée. La caractéristique physiologique peut être une caractérisation de la sudation de la partie 11 de l'individu exposée ou bien la pulsation cardiaque de l'individu. Ces caractéristiques physiologiques permettent de débusquer les fraudes, lorsque la zone exposée au dispositif au lieu d'être une zone vivante est un leurre. L'analyse de ces caractéristiques physiologiques permettent de discriminer les éventuels leurres. Le fait de disposer des deux caractéristiques physiologiques permet d'augmenter encore la fiabilité de la détection d'une éventuelle fraude mais une seule des caractéristiques physiologiques peut suffire en général. Les moyens de traitement 10 sont des algorithmes de traitement d'informations qui sont bien connus par exemple tels que décrits dans le document [6] pour les caractéristiques de la sudation.

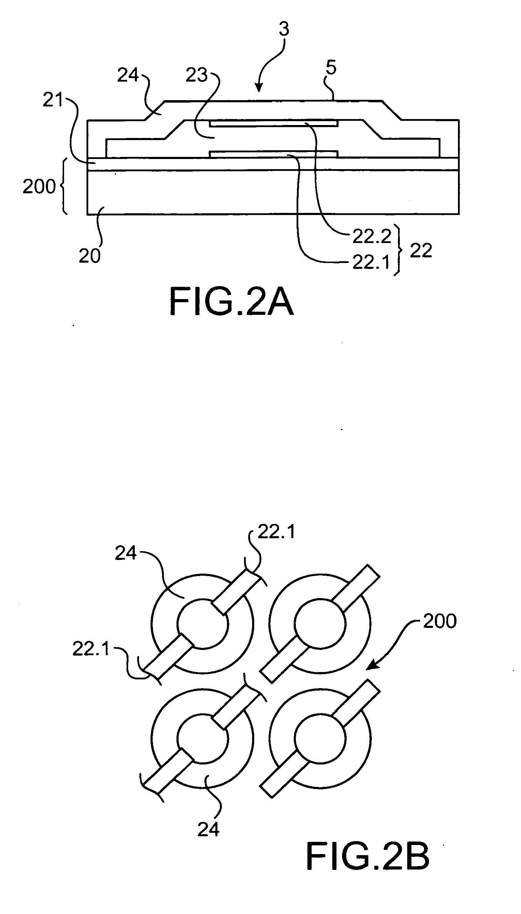

On aura avantage à utiliser comme éléments sensibles des éléments capacitifs. On va se référer aux figures 2A, 2B qui illustrent un premier mode de réalisation des éléments sensibles capacitifs. On pourrait bien sûr utiliser des éléments sensibles résistifs au lieu de capacitifs.

La figure 2A montre en coupe quelques éléments sensibles 3 d'un capteur 1 utilisé dans le dispositif de l'invention. La figure 2B montre une vue de dessous des éléments sensibles 3 de la figure 2A. Ces éléments 3 peuvent être de type connu à membrane souple, réalisés en technologie MEMS. Tous les éléments sensibles 3 sont intégrés sur une même base électriquement isolante 200 formée par exemple d'un substrat 20 semi-conducteur tel que le silicium recouvert d'une couche électriquement isolante 21, par exemple en oxyde de silicium. Chaque élément sensible 3 comporte une paire 22 d'électrodes 22.1, 22.2 placées en vis-à-vis, et séparées par un espace 23 de l'ordre de 0,1 micromètre à 5 micromètres environ; une variation de l'espace 23 induit une variation de tension aux bornes des électrodes de la paire, ce qui traduit une variation de la capacité. L'une des électrodes de la paire 22.1 est fixe et solidaire de la base 200 côté couche isolante 21, l'autre électrode 22.2 de la paire est mobile. Chaque élément sensible possède aussi une membrane souple 24 électriquement isolante dont le bord est fixé à la base 200. L'électrode mobile 22.2 est solidaire de la membrane souple 24. La membrane 24 délimite une cavité qui englobe au moins en partie l'électrode fixe 22.1. Une déformation de la membrane souple 24, sous l'effet d'une force locale de contact exercée par la partie appliquée et qui est supposée être celle de l'individu devant être reconnu, génère cette variation de l'espace 23. De préférence, l'électrode mobile 22.2 est fixée sur la face interne de la membrane souple 24 côté cavité. On pourrait envisager de la placer sur la face externe de la membrane souple 24, mais il faudrait alors lui adjoindre une protection de manière que la partie appliquée ne vienne pas en contact direct avec elle. Dans les configurations présentées, c'est la face externe de la membrane souple 24 qui définit la zone de contact 5. La figure 2A est une vue de dessous des éléments sensibles 3 substrat exclu. La membrane souple 24 réalisée par exemple en Si₃N₄ aura typiquement une épaisseur de l'ordre du micromètre et sera suffisamment souple pour être sensible à des pressions de contact de l'ordre de quelques dizaines de kilo Pascals.

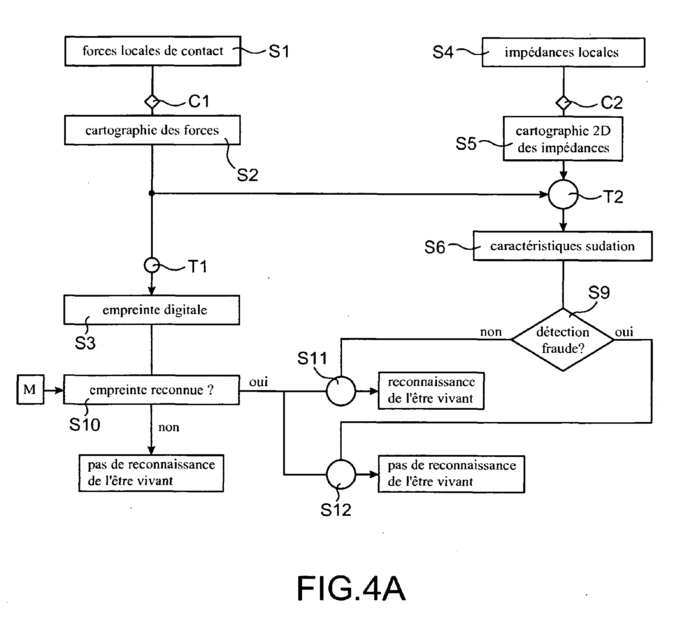

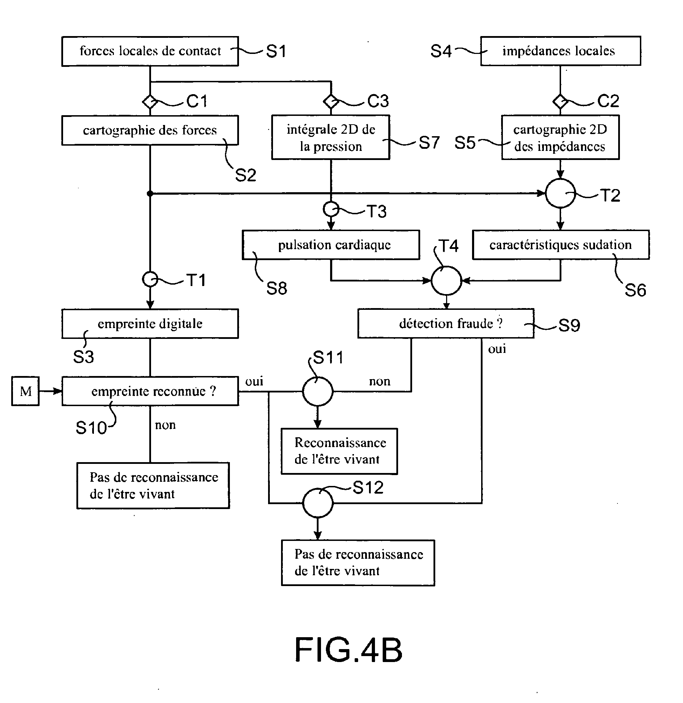

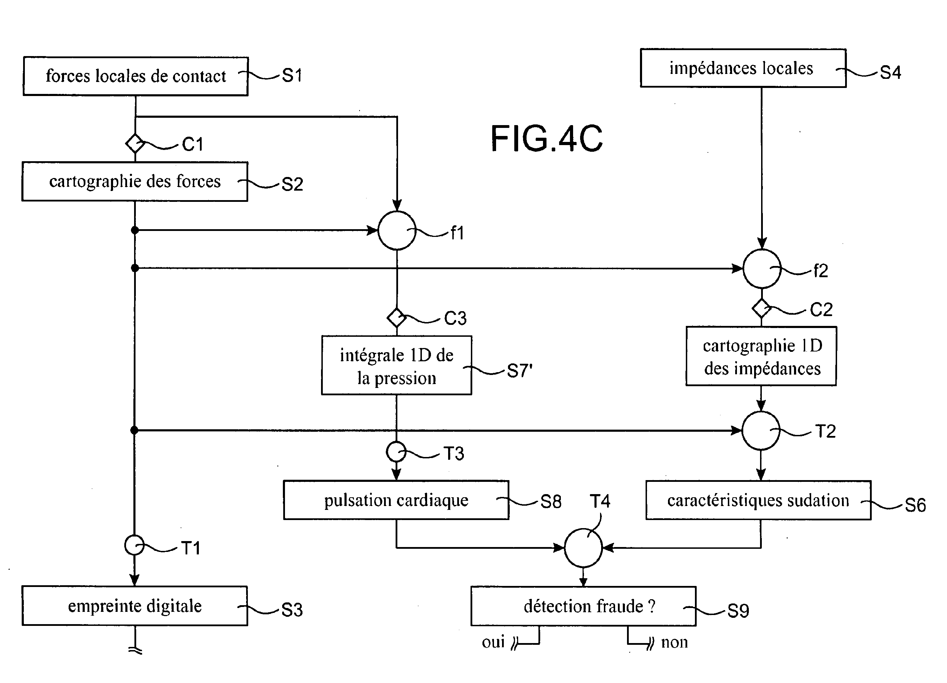

Chaque élément sensible 3 est relié par ses électrodes 22.1, 22.2 à un dispositif électronique de mesure (non représenté sur les figures 2 mais visible sur les figures 4 à 6) incluant le premier moyen de conversion 8.1, et le second moyen de conversion 8.2, 8.3 et une partie des moyens de multiplexage 7. Ce dispositif électronique est porté tout comme les éléments sensibles par la base 200.

Le capteur 1 peut comprendre des éléments sensibles 3 tous identiques agencés en matrice, chaque élément sensible 3 associé à son dispositif électronique de mesure occupant une surface de l'ordre de 50 micromètres par 50 micromètres. On peut alors acquérir une image de la partie 11 appliquée sur la zone de contact 5 avec une résolution de l'ordre de 500 dpi (abréviation anglo-saxonne de dots per inch soit points par pouce).

Les éléments sensibles 3 peuvent être réalisés de manière collective sur la base 200, par exemple par des procédés compatibles avec ceux de réalisation de circuits intégrés de type CMOS employés eux pour la réalisation du dispositif électronique de mesure. On peut par exemple se référer au document [8] dont les références complètes sont données en fin de description.

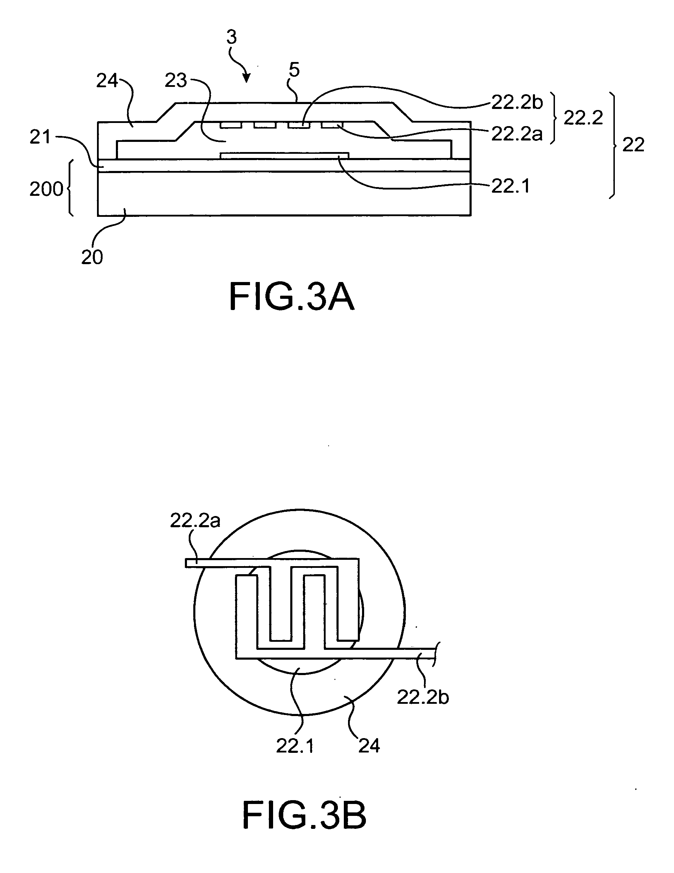

En variante illustrée sur les figures 3A, 3B, il est possible de subdiviser en deux sous-électrodes 22.2a, 22.2b l'une des électrodes 22.2 d'une paire de manière à pouvoir réaliser aisément une mesure différentielle d'impédance de surface. On peut se référer aux figures 3A, 3B qui illustrent ce second mode de réalisation. L'électrode subdivisée 22.2 en deux sous-électrodes 22.2a, 22.2b est l'électrode mobile.

Les deux sous-électrodes 22.2a, 22.2b peuvent être interdigitées mais d'autres configurations sont envisageables, par exemple comme illustré dans le document [9] dont les références complètes sont données en fin de description.

On va maintenant s'intéresser à un procédé de reconnaissance d'un individu qui met en oeuvre le dispositif qui vient d'être décrit.

L'acquisition d'informations brutes par le capteur, leur conversion et leur traitement permettent d'obtenir d'une part une image de la partie appliquée sur la zone de contact du dispositif de reconnaissance d'individu et d'autre part une information sur la survenue d'une fraude ou non.

On peut se référer à la figure 4A qui montre un exemple d'un premier mode de réalisation du procédé de l'invention.

On acquiert des informations brutes relatives aux forces locales de contact qui sont exercées par la partie mise en contact avec la zone de contact du dispositif de reconnaissance d'individu sur les éléments sensibles (bloc S1). Ces forces locales de contact dépendent de la topographie de la peau de la partie de l'individu à reconnaître.

Ces informations brutes sont aisément accessibles, elles correspondent à une valeur de tension traduisant une valeur de capacité au niveau de chacun des éléments sensibles du capteur dans la mesure où le capteur est un capteur capacitif. La valeur de la capacité peut être mesurée de plusieurs façons.

Ces informations brutes relatives aux forces locales de contact sont converties (C1) dans le premier moyen de conversion de manière à établir une cartographie des forces locales de contact qui s'appliquent sur le capteur (bloc S2). Il s'agit d'une cartographie bidimensionnelle 2D dans laquelle chaque élément sensible du capteur ou pratiquement chaque élément sensible fournit individuellement une information. Par cartographie bidimensionnelle, on entend une cartographie qui est basée sur les informations délivrées par sensiblement tous les éléments sensibles 3 du capteur 1. Cette cartographie bidimensionnelle des forces locales de contact va servir après un traitement (T1), dans les moyens de traitement, à délivrer une image de la partie mise en contact et qui devrait être celle de l'individu à reconnaître, en l'occurrence, dans l'exemple décrit de son empreinte digitale (bloc S3). Le traitement (T1) est classique et se fait par analyse des crêtes et des vallées de la peau observées et par la détermination de points caractéristiques de l'empreinte ou minuties qui sont des variations de la continuité des crêtes. L'empreinte digitale qui est alors obtenue au bloc S3 est indépendante des impédances locales et ne dépend donc pas de caractéristiques de la sudation comme c'était le cas dans les documents [6] et [7].

Cette empreinte traduit une caractéristique morphologique de l'individu. Cette empreinte pourra alors être comparée (bloc S10) à celles d'un ou plusieurs individus à reconnaître qui auront été au préalable stockées dans une mémoire appropriée M. Le résultat de la comparaison permettra de déterminer si l'individu est reconnu ou non. Ces empreintes auront pu être mise en mémoire lors d'une phase d'initialisation du dispositif de reconnaissance.

Selon le procédé de l'invention, on va faire également avec le même capteur 1 la détection d'au moins une caractéristique physiologique de l'individu pour vérifier si la partie 11 qui exposée au capteur 1 est réellement celle d'un individu, c'est-à-dire si elle est vivante.

Cette caractéristique peut être une caractérisation de la sudation de la peau de la partie exposée au capteur. Cette caractéristique de sudation ne peut être obtenue à partir des informations brutes de forces locales de contact. La sudation apparaît au niveau de pores qui se situent sur les crêtes de la partie de peau exposée au capteur et se diffuse en suite le long de ces crêtes.

On acquiert alors, toujours avec le même capteur 1, des informations brutes qui sont des impédances locales au contact (bloc S4). Avec un tel capteur sensible au contact, on peut obtenir sans compromis spatial les deux types d'informations brutes. Après conversion C2 dans le second moyen de conversion, les informations brutes d'impédances locales au contact conduisent à établir une cartographie bidimensionnelle 2D des impédances locales (bloc S5), cette dernière servant de manière conventionnelle après un traitement T2, dans les moyens de traitement, à déterminer les caractéristiques de la sudation (bloc S6) de la partie mise en contact. Avec ces caractéristiques, on peut juger, par comparaison, si les caractéristiques de la sudation détectées sont celles moyennes d'un individu ou non et donc détecter une fraude (bloc S9).

Si les caractéristiques de la sudation correspondent à celles d'un individu, il n'y a pas de fraude, dans le cas contraire il y à fraude. En l'absence de fraude et si l'empreinte détectée correspond à une des empreintes mise en mémoire, l'individu est reconnu et identifié (bloc S11). En présence d'une fraude et si l'empreinte détectée correspond à une des empreintes mise en mémoire, l'individu n'est pas reconnu (bloc S12).

Il est à noter que la cartographie bidimensionnelle des impédances (bloc S5) n'est pas nécessairement indépendante de la cartographie des forces de contact réalisée au bloc S2. En effet l'impédance locale mesurée par un élément sensible peut être elle-même fonction à la fois de la surface en contact et de l'impédance de cette surface. La surface en contact peut être elle-même une fonction de la force locale exercée si la zone en contact avec le capteur est élastique. Dans ce cas, les caractéristiques de sudation (bloc S6) seront obtenues à partir de la cartographie bidimensionnelle des impédances corrigée par la cartographie bidimensionnelle des forces par exemple en normalisant l'impédance par la force de contact. Cette correction est traduite sur les figures 4 par la flèche dirigée depuis l'aval du bloc S2 vers le traitement T2.

Au lieu de faire une mesure locale d'impédance ou en complément à cette mesure, le procédé de l'invention peut prévoir de faire une mesure globale de pression exercée sur la zone de contact par la partie de l'individu à reconnaître. On va de cette manière déterminer une autre caractéristique physiologique de l'individu qui est sa pulsation cardiaque. On peut se référer à la figure 4B sur laquelle on réalise deux mesures conduisant à deux caractéristiques physiologiques. On aurait bien sûr pu ne détecter que la pulsation cardiaque. Ce mode de réalisation est similaire à celui illustré à la figure 4A pour la détection de l'éventuelle fraude une fois que les informations traduisant la pulsation cardiaque ont été obtenues et c'est pourquoi il n'est pas illustré seul. L'obtention de la pulsation cardiaque est décrite en référence à la figure 4B.

Cette mesure globale de pression se fait en en utilisant comme informations brutes les forces locales de contact acquises au bloc S1. Ces informations brutes sont converties (C3) dans un autre second moyen de conversion de manière à établir une intégrale bidimensionnelle 2D de la pression (bloc S7) qui s'exerce sur le capteur. La conversion C3 est une intégration des forces locales de contact. Elle tient compte de la spécificité des informations nécessaires pour aboutir à la pulsation cardiaque telle que la résolution temporelle ou la largeur de la bande passante. La pulsation cardiaque (bloc S8) est déterminée à partir de l'intégrale bidimensionnelle de la pression après un traitement approprié T3, dans les moyens de traitement, et plus particulièrement une recherche et une analyse des variations temporelles de cette intégrale de la pression. Ce traitement ne pose pas de problème à un homme du métier. On peut alors juger si les variations temporelles correspondent ou non à celles d'une pulsation cardiaque réelle moyenne d'un individu.

De la même manière que précédemment, si la pulsation cardiaque est considérée comme réelle et que l'empreinte est connue alors l'individu qui possède cette empreinte est reconnu.

Dans le cas où les deux caractéristiques physiologiques sont détectées comme sur la figure 4B, elles peuvent être combinées (traitement T4) pour conclure à la survenue d'une fraude ou non (bloc S9). Si une fraude est détectée, il n'y a pas de reconnaissance de l'individu même si l'empreinte est connue (bloc S12). Si aucune fraude est détectée et que l'empreinte est connue (bloc S11), l'individu ayant cette empreinte est alors reconnu. On utilise alors les caractéristiques de sudation et la pulsation cardiaque détectées pour confirmer l'identité de l'individu dont on a capturé l'empreinte digitale.

Une augmentation de la vitesse de déroulement du procédé de reconnaissance selon l'invention, sans diminution de sa fiabilité, peut être obtenue en procédant comme expliqué ci-dessous en se référant à la figure 4C.

Cette amélioration consiste à utiliser la cartographie bidimensionnelle des forces de contact (bloc S2) réalisée précédemment pour déterminer quels sont les éléments sensibles les plus significatifs à prendre en compte lors de la détermination de la ou des caractéristiques physiologiques. En effet lors de la mise en contact de la partie sur le capteur, seule une fraction des éléments sensibles délivrent une information utile pour la détermination d'une caractéristique physiologique. Il s'agit des éléments sensibles qui détectent les forces locales les plus importantes. Ces éléments sensibles capturent des informations relatives aux lignes de crêtes de l'empreinte digitale. Les vallées de l'empreinte digitale conduisent aux forces les plus faibles. Les éléments sensibles utiles sont donc ceux qui détectent les lignes de crêtes, les autres peuvent être ignorés. On part de l'hypothèse que les éléments sensibles sont plus petits que la distance séparant deux lignes de crêtes adjacentes. A partir de la cartographie bidimensionnelle des forces de contact (bloc S2), on sélectionne donc les éléments sensibles utiles qui vont être pris en compte pour déterminer l'intégrale de la pression (bloc S7') et la cartographie d'impédances (bloc S5'). On nomme cette intégrale et cette cartographie unidimensionnelles ou 1D car elles sont issues de signaux délivrés par des éléments sensibles disposés sensiblement sur une ligne (la ligne de crête) au lieu d'élément sensibles disposés selon une surface. Cette sélection correspond à un filtrage nommé f1 lorsqu'il conduit à l'intégrale unidimensionnelle de la pression (bloc S7') et f2 lorsqu'il conduit à la cartographie unidimensionnelle des l'impédances (bloc S5'). La cartographie unidimensionnelle de l'impédance contient toute l'information nécessaire tout en étant de taille inférieure à la cartographie bidimensionnelle de l'impédance. Elle permet donc des traitements plus rapides pour aboutir aux caractéristiques de sudation mais il n'y a pas de perte d'information. Il en est de même pour l'intégrale de la pression. Si la partie appliquée n'est pas un doigt, il est également possible de sélectionner des éléments sensibles utiles sur lesquels la pression est importante.

Le reste du déroulement du procédé est similaire à celui décrit à la figure 4B et pour ne pas alourdir la description il n'est pas repris ni totalement dessiné.

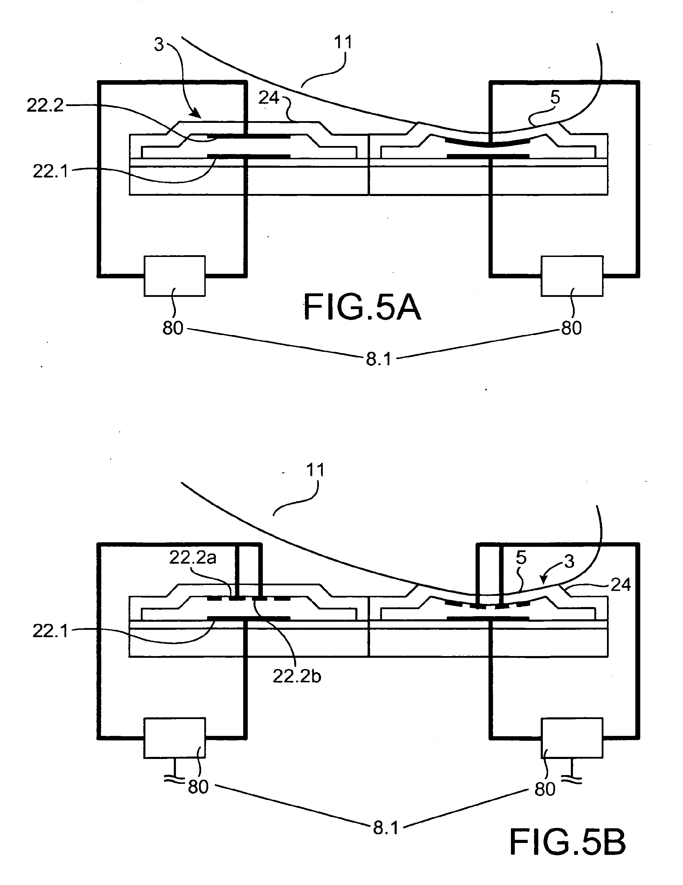

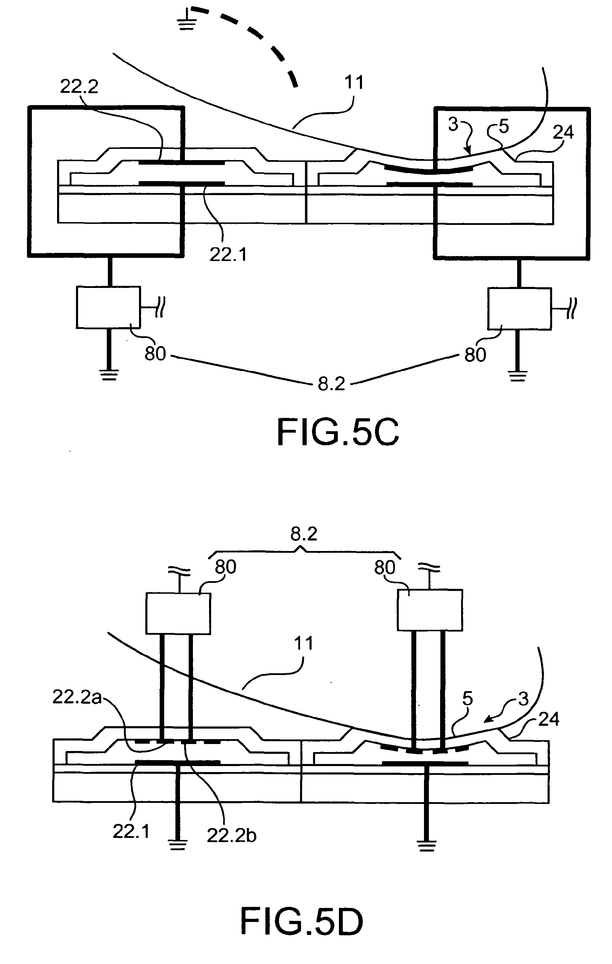

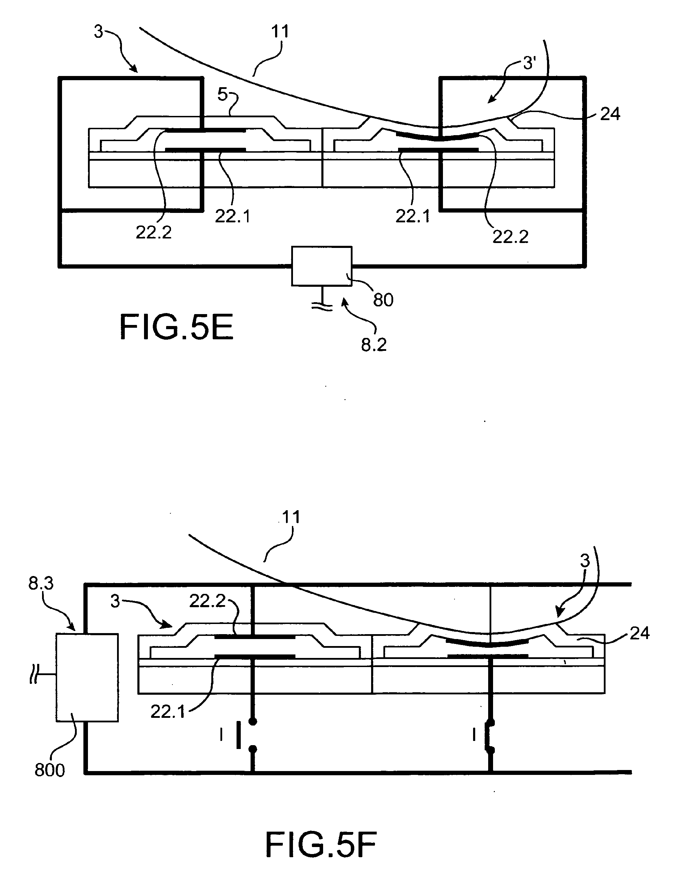

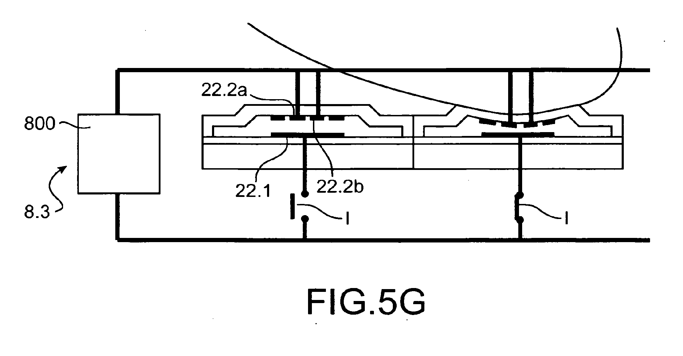

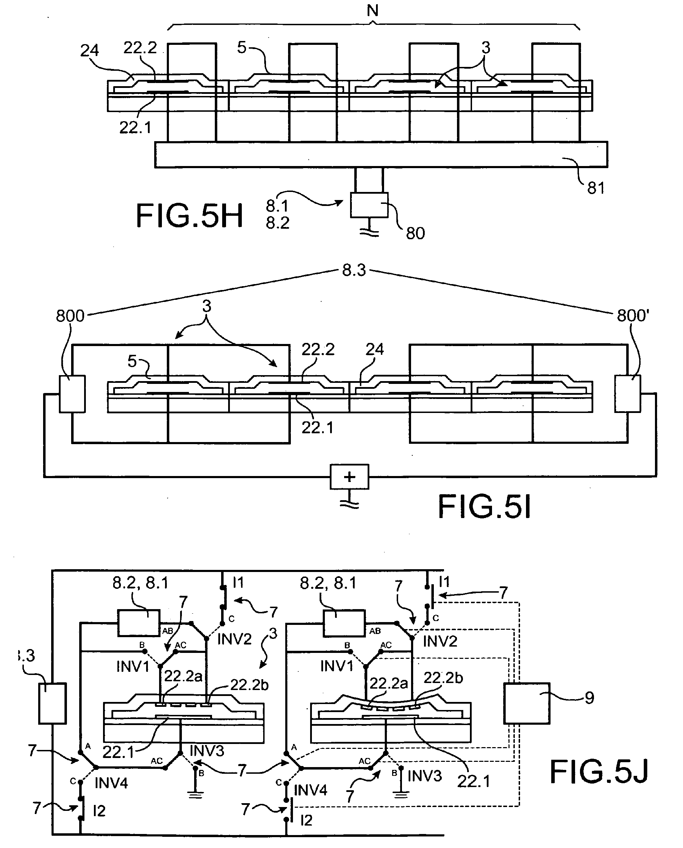

On va maintenant s'intéresser aux différents modes d'acquisition des informations délivrées par les éléments sensibles 3 du capteur 1 en se référant aux figures 5A à 5J. Les figures 5A, 5C, 5E, 5F, 5H, 5I, 5J concernent des éléments sensibles à une paire d'électrodes unitaires comme illustré sur les figures 2 et les figures 5B, 5D, 5G concernent des éléments sensibles dont une électrode de la paire est subdivisée en deux sous-électrodes comme illustré sur les figures 3.

Sur les figures 5A, 5B, le dispositif de reconnaissance est dans un mode dans lequel il acquiert les informations brutes de forces locales qui s'exercent sur la zone de contact 5 pour établir la cartographie des forces locales. Dans cette configuration, le premier moyen de conversion 8.1 est local, c'est-à-dire que chaque élément sensible 3 est relié à un convertisseur 80 qui lui est propre. Plus précisément chaque convertisseur 80 est relié en entrée d'une part à une électrode 22.1 de l'élément sensible 3 et d'autre part à l'autre électrode 22.2 de l'élément sensible 3. La sortie du convertisseur 80 alimente les moyens de traitement (non représentés). Chaque élément sensible 3 sert à faire une mesure locale de la capacité s'établissant entre les deux électrodes 22.1, 22.2 de la paire 22 de l'élément sensible 3. Chaque convertisseur 80 délivre des informations représentatives de la force de contact s'exerçant au niveau de l'élément sensible 3 associé et ces informations vont former la cartographie des forces locales de contact. Chaque élément sensible 3 ne détecte que la force exercée par une portion de la partie 11 qui exerce le contact, cette partie se trouvant en regard de l'élément sensible 3. Sur la figure 5A, les deux éléments sensibles 3 ne détectent pas la même force, puisque la partie 11 ne s'appuie que sur l'un d'eux et pas sur les deux. L'information recueillie dépend bien de la force locale de contact et est indépendante de l'impédance de surface de la partie 11 qui exerce le contact.

Sur la figure 5B, la seule différence est que les deux sous-électrodes 22.2a, 22.2b de l'électrode 22.2 subdivisée sont reliées entre elles ce qui permet d'augmenter la sensibilité de la mesure. Il n'y a pas de modification au niveau du premier moyen de conversion 8.1.

Sur les figures 5C, 5D et 5E, le dispositif de reconnaissance est dans un mode dans lequel il acquiert les informations brutes d'impédances locales pour dresser la cartographie des impédances locales. Le second moyen de conversion 8.2 est également local. Il comporte un convertisseur 80 associé à chaque élément sensible 3. Sur la figure 5C, les deux électrodes 22.1, 22.2 de la paire 22 d'électrodes sont reliées entre elles et en entrée du convertisseur 80 associé. La partie 11 en contact est au potentiel de la masse. Le convertisseur 80 est également relié en entrée à la masse. Sa sortie alimente les moyens de traitement (non représentés). La mesure est une mesure de capacité par rapport à la masse comme décrit dans le document [10] dont les références complètes se trouvent en fin de description.

Ainsi la variation de la capacité due au déplacement de la membrane souple 24 n'est pas prise en compte dans la mesure d'impédances locales. Dans cette configuration, alors que l'élément sensible 3 comporte une paire d'électrodes unitaires 22.1, 22.2, il faut prévoir à la fois le premier moyen de conversion 8.1 et le second moyen de conversion 8.2 distincts, l'un pour la mesure des forces locales de contact (figure 5A) et l'autre pour la mesure des impédances locales au contact (figure 5C) car la mesure des forces locales de contact est une mesure différentielle et la mesure des impédances locales au contact est une mesure d'impédance vers la masse.

Lorsque l'une des électrodes 22.1 est subdivisée en deux sous-électrodes 22.1a, 22.1b comme sur la figure 5D, toujours dans la configuration de mesure des impédances locales, les deux sous-électrodes 22.2a et 22.2b sont connectées chacune à une entrée différente du convertisseur 80 associé. L'autre électrode de la paire 22.1 est connectée à un potentiel fixe par exemple la masse. La sortie du convertisseur 80 est toujours connectée aux moyens de traitement (non représentés). Dans cette configuration, il est possible d'utiliser le premier moyen de conversion 8.1 et le second moyen de conversion 8.2 confondus, ils servent à la fois pour la mesure locale des forces locales (figure 5B) et la mesure locale des impédances locales (figure 5D) car les deux mesures sont des mesures différentielles. Seul leur branchement aux électrodes diffère et les moyens de multiplexage permettent de modifier leur branchement.

Les modes des figures 5B et 5D sont plus intéressants industriellement que le mode de la figure 5C.

Il est également possible, lorsque l'élément sensible 3 ne comporte qu'une paire d'électrodes unitaires 22.1, 22.2 comme illustré sur la figure 5E, de mesurer l'impédance de surface entre deux éléments sensibles voisins 3 et 3'. Le second moyen de conversion 8.2 comportera alors un seul convertisseur 80 pour les deux éléments sensibles voisins 3 et 3'. Les deux électrodes 22.1, 22.2 d'un élément sensible 3 reliées entre elles sont connectée à une entrée du convertisseur 80. Les deux électrodes 22.1, 22.2 de l'autre élément sensible 3', reliées entre elles, sont connectées à l'autre entrée du convertisseur 80. La sortie du convertisseur 80 est reliée aux moyens de traitement (non représentés). Dans cette configuration la résolution spatiale de la mesure est dégradée mais bien souvent cela n'est pas gênant. On peut quand même considérer que l'on fait une mesure locale. L'avantage que présente cette configuration est que le premier moyen de conversion et le second moyen de conversion peuvent être confondus, ils servent à la fois pour la mesure locale des forces locales (figure 5A) et la mesure locale des impédances locales (figure 5E) car les deux mesures sont des mesures de capacité différentielles.

Les convertisseurs 80 employés dans les configurations qui viennent d'être décrites sont locaux, ils font partie de la cellule de base comme cela a été décrit aux figures 2 et 3 et/ou sont communs à deux éléments sensibles 3, 3'. Ils sont situés très près des électrodes 22.1, 22.2, généralement en dessous des paires d'électrodes comme décrit dans le document [9]. La longueur de connexion entre électrodes 22.1, 22.2 et convertisseur 80 est donc très courte ce qui permet de mesurer de faibles variations de capacité. Les besoins en résolution sont alors limités, par exemple au maximum 8 bits pour une bande passante de l'ordre de quelques Hz. Ces convertisseurs peuvent être des convertisseurs à approximation successive.

La mesure de la pression globale est illustrée sur les figures 5F et 5G. On utilise ici l'autre second moyen de conversion 8.3 relatif à la mesure de la pression globale. Il est différent du premier second moyen de conversion 8.2 décrit précédemment. Cet autre second moyen de conversion 8.3 comporte un convertisseur 800 associé à tous les éléments sensibles 3 ou à un groupe de plusieurs éléments sensibles 3. Dans la configuration de la figure 5F, toutes les paires 22 d'électrodes 22.1, 22.2 des éléments sensibles 3 sont connectées en parallèle et reliées en entrée d'un unique convertisseur 800 formant l'autre second moyen de conversion 8.3. Ce convertisseur 800 est global pour tous les éléments sensibles 3 du capteur. La sortie du convertisseur 800 est à relier aux moyens de traitement (non représentés). Dans la configuration de la figure 5G où l'une des électrodes 22.2 est subdivisée en deux sous-électrodes 22.2a, 22.2b, le branchement est similaire mais les deux sous-électrodes 22.2a, 22.2b sont reliées ensemble. Le convertisseur global 800 doit permettre d'obtenir une forte résolution typiquement supérieure à 14 bits pour des bandes passantes supérieure à 10 Hz. Dans cette configuration, la contrainte de taille n'est pas critique puisque ce convertisseur unique 800 jouxtera le réseau d'éléments sensibles 3. On pourra par exemple utiliser un convertisseur sigma-delta bien connu en électronique.

Les figures 5F et 5G présentent des interrupteurs I montés entre chaque même électrode 22.1 (fixe ou mobile) d'une paire et le convertisseur 800. Ces interrupteurs I font partie des moyens dé multiplexage 7, une description additionnelle de ces moyens sera faite ultérieurement. Dans cette configuration, les interrupteurs I permettent de réaliser l'intégrale unidimensionnelle de la pression puisque ainsi on peut sélectionner un élément sensible 3 ou au contraire l'ignorer.

En variante comme illustré sur la figure 5H, il est possible que le premier moyen de conversion 8.1 ou le second moyen de conversion 8.2 comporte un convertisseur 80 qui coopère avec un groupe de N éléments sensibles 3. Un multiplexeur local 81 est inséré entre ce convertisseur 80 et les éléments sensibles 3 qui coopèrent avec lui. Cette variante permet d'augmenter la surface disponible pour le convertisseur 80 et le multiplexeur local 81 d'un facteur N ou d'augmenter la densité des éléments sensibles 3.

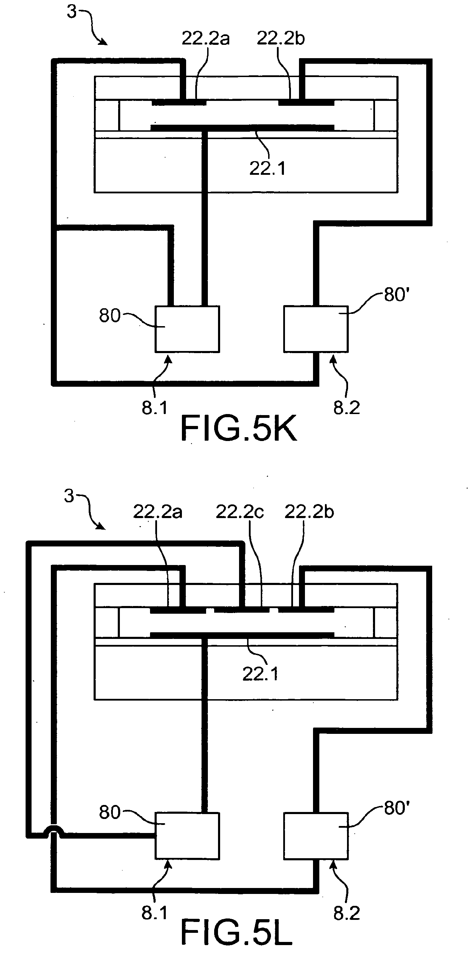

Il est possible que l'autre second moyen de conversion 8.3 relatif à la mesure de la pression globale incorpore plusieurs convertisseurs 800 pour faire la mesure globale de la pression, chacun d'entre eux coopérant avec un groupe d'éléments sensibles 3 seulement, les informations délirées par ces convertisseurs 800 étant ensuite additionnées. Cette variante est illustrée sur la figure 5I, l'additionneur étant référencé par un +.

On peut illustrer ici l'intérêt d'utiliser la cartographie bidimensionnelle des forces locales pour sélectionner les éléments sensibles 3 utilisés pour établir l'intégrale unidimensionnelle de la pression. Pour un pas de 50 micromètres, la valeur typique de la capacité associée à un élément sensible 3 est de l'ordre de 15 fF. Pour un réseau de 100x100 éléments sensibles 3 la capacité totale correspondant à l'intégrale bidimensionnelle de la pression en utilisant toutes les éléments sensibles 3 est de 150 pF. Si on ne conserve qu'environ 10% des éléments sensibles 3 lors de la sélection pour ne conserver que les plus significatifs, on obtient une capacité totale de l'ordre de 15 pF mais avec une variation temporelle plus importante.

Le capteur qui a été présenté sur la figure 5J possède trois modes d'acquisition distincts à savoir, mode A : mesure locale de force, mode B : mesure locale d'impédance et mode C : mesure globale de force, permettant d'obtenir la cartographie bidimensionnelle des forces locales, l'intégrale de la pression et la cartographie des impédances locales à partir du même réseau d'éléments sensibles. Le passage d'un mode à l'autre se fait grâce aux moyens de multiplexage 7 qui modifient les connexions entre les éléments sensibles 3 et les moyens de conversion 8.1, 8.2, 8.3. Dans l'exemple décrit les premier et second moyens de conversion 8.1, 8.2 sont confondus. Dans la suite de la description de la figure 5J, on ne parle que du premier moyen de conversion 8.1.

Les moyens de multiplexage 7 sont formés, pour chaque élément sensible 3 d'un ensemble d'interrupteurs I1, I2 et d'inverseurs INV1, INV2, INV3, INV4 permettant de relier de manière choisie chacune des électrodes 22.1, 22.2 des éléments sensibles 3 aux premier et seconds moyens de conversion 8.1, 8.2, 8.3 en fonction du mode d'acquisition choisi. Les interrupteurs I1, I2 permettent également de sélectionner des éléments sensibles à utiliser pour les mesures. Lors d'une mesure locale de force (mode A), on détermine les éléments sensibles sollicités, c'est-à-dire des éléments sensibles utiles. La mesure globale de force (mode C) peut se faire uniquement avec les éléments sensibles utiles.

Les moyens de commande 9 sont donc des éléments logiques permettant de transformer une consigne correspondant au mode d'acquisition A, B ou C (mesure locale des force locales, mesure locale des impédances locales, mesure globale de la pression) en un ensemble d'états pour les interrupteurs I1, I2 et inverseurs INV1, INV2, INV3, INV4 des moyens de multiplexage 7.

L'une des sous-électrode 22.2a peut être reliée via le premier inverseur INV1 soit à une première borne du premier moyen de conversion 8.1 (mode B), soit à l'autre sous électrode 22.2b (mode A et mode C). L'autre sous-électrode 22.2b peut être reliée via le second inverseur INV2 soit à l'autre borne du premier moyen de conversion 8.1 (mode A et mode B), soit à une première borne du troisième moyen de conversion 8.3 via un premier interrupteur I1 (mode C).

L'électrode fixe 22.1 peut être reliée via le troisième inverseur INV3 soit à la masse (mode B) soit au quatrième inverseur INV4 (mode A et mode C). Le quatrième inverseur peut ainsi relier l'électrode fixe 22.1 d'une part à la première borne du premier moyen de conversion 8.1 (mode A), soit à la seconde borne du troisième moyen de conversion 8.3 via le second interrupteur I2 (mode C).

Ainsi dans le mode A, les deux sous-électrodes 22.2a, 22.2b sont reliées entre elles et à la seconde borne du premier moyen de conversion 8.1. L'électrode fixe 22.1 est reliée à la première borne du premier moyen de conversion 8.1 via le troisième inverseur INV3 et le quatrième inverseur INV4.

Dans le mode B, l'une des sous-électrodes 22.2a est reliée à la première borne du premier moyen de conversion 8.1. via le premier inverseur INV1 et l'autre 22.2b est reliée à la seconde borne du premier moyen de conversion 8.1 via le second inverseur INV2. L'électrode fixe 22.1 est reliée à la masse via le troisième inverseur INV3.

Dans le mode C, les deux sous-électrodes 22.2a, 22.2b sont reliées entre elles et à la première borne du troisième moyen de conversion 8.3 via le second inverseur INV2. L'électrode fixe 22.1 est reliée à la seconde borne des troisièmes moyens de conversion 8.3 via le troisième inverseur INV3, le quatrième inverseur et le second interrupteur I2.

Sur cette représentation, on n'a pas porté les interrupteurs permettant de faire la sélection des éléments sensibles utiles qui étaient illustrés aux figures 5F, 5G. Le capteur possède donc au moins deux modes d'acquisition distincts et éventuellement trois. Les mesures peuvent être séquentielles ou simultanées.

Sur les figures 5K à 5M on va décrire un mode de réalisation des moyens de mesure qui sont exempts de moyens de multiplexage.

Sur ces figures, on n'a représenté qu'un seul élément sensible 3 du capteur. Bien sûr il y en a plusieurs et les moyens de conversion peuvent être reliés à plusieurs éléments sensibles.

Sur la figure 5K, il y a une paire d'électrodes formée d'une électrode 22.1 commune et en vis-à-vis deux sous-électrodes 22.2a et 22.2b. Ces dernières sont solidaires de la membrane.

La mesure de force et la mesure d'impédance sont basées toutes les deux sur une mesure de capacité. L'une des deux sous-électrodes 22.2a est commune aux deux mesures.

On prévoit un premier moyen de conversion 8.1 formé d'un convertisseur 80 relié électriquement d'une part à l'électrode 22.1 commune et d'autre part à l'une des sous-électrodes 22.2a. Ce premier moyen de conversion 8.1 est apte à délivrer des informations relatives aux forces de contact.

On prévoit aussi un second moyen de conversion 8.2 formé d'un convertisseur 80', relié électriquement d'une part à l'une des sous-électrodes 22.2a et d'autre part à l'autre sous-électrode 22.2b.

Ce second moyen de conversion 8.2 est apte à délivrer des informations relatives à l'autre grandeur physique liée au contact, telle l'impédance locale. Les mesures de forces et d'impédances peuvent être simultanées.

Sur la figure 5L, au lieu d'avoir deux sous-électrodes ou en a trois : 22.2a, 22.2b, 22.2c. Elles sont solidaires de la membrane.

Le premier convertisseur 80 est relié électriquement à l'électrode commune 22.1 d'une part et d'autre part à l'une des sous-électrodes 22.2c. Le second convertisseur 80' est relié électriquement aux deux autres sous-électrodes 22.2a et 22.2b. Le principe de mesure est le même que sur la figure 5K.

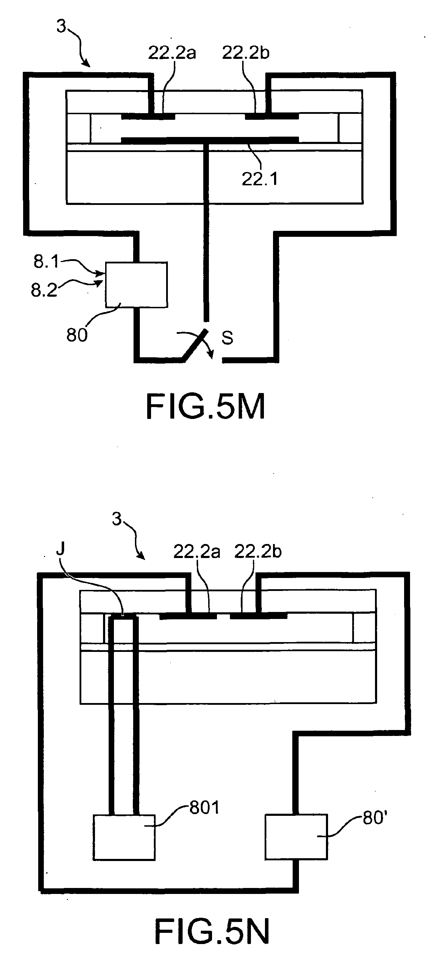

Sur la figure 5M, on retrouve une électrode commune 22.1 et deux sous-électrodes 22.2a et 22.2b, un seul convertisseur 80 associé à un commutateur S permettant de passer d'une mesure de force à une mesure d'impédance selon sa position. Dans une position du commutateur S, le convertisseur 80 est relié électriquement d'une part à l'électrode commune 22.1 et d'autre part à l'une des sous-électrodes 22.2a. Dans l'autre position du commutateur S, le convertisseur 80 est relié électriquement d'une part à l'une de sous-électrodes 22.2a et d'autre part à l'autre sous-électrode 22.2b. Les mesures de force et d'impédance ne peuvent être simultanées. Le premier moyen de conversion 8.1 et le second moyen de conversion 8.2 sont confondus et formés par le convertisseur 80. Les variantes décrites aux figures 5K, 5L et 5M pourraient être intégrées à la figure 5E dans laquelle l'impédance de surface est mesurée entre plusieurs éléments sensibles voisins. Un seul convertisseur est utilisé pour plusieurs éléments sensibles. Il est également possible d'utiliser deux convertisseurs différents et d'ajouter des commutateurs dans le multiplexeur. Cela permet d'augmenter la sensibilité de la détection.

Sur la figure 5N, on a représenté une variante sur laquelle chaque élément sensible 3 comporte deux sous-électrodes 22.2a, 22.2b mais pas d'électrode commune. Les deux sous-électrodes 22.2a, 22.2b sont solidaires de la membrane. Ces deux sous-électrodes 22.2a, 22.2b sont reliées électriquement à un convertisseur 80' qui forme le second moyen de conversion pour la mesure de l'impédance. La mesure de l'impédance est toujours basée sur la détection capacitive. La mesure de force est basée sur une détection piézorésistive avec au moins une jauge piézorésistive.

Sur la figure 5N, des jauges piézorésistives J montées en pont de Wheastone coopèrent avec la membrane de l'élément sensible 3. Elles détectent la contrainte induite par la déformation de la membrane. Elles sont reliées électriquement à un premier moyen de conversion formé d'un convertisseur 801.

Les jauges piézorésistives sont prévues en plus des électrodes.

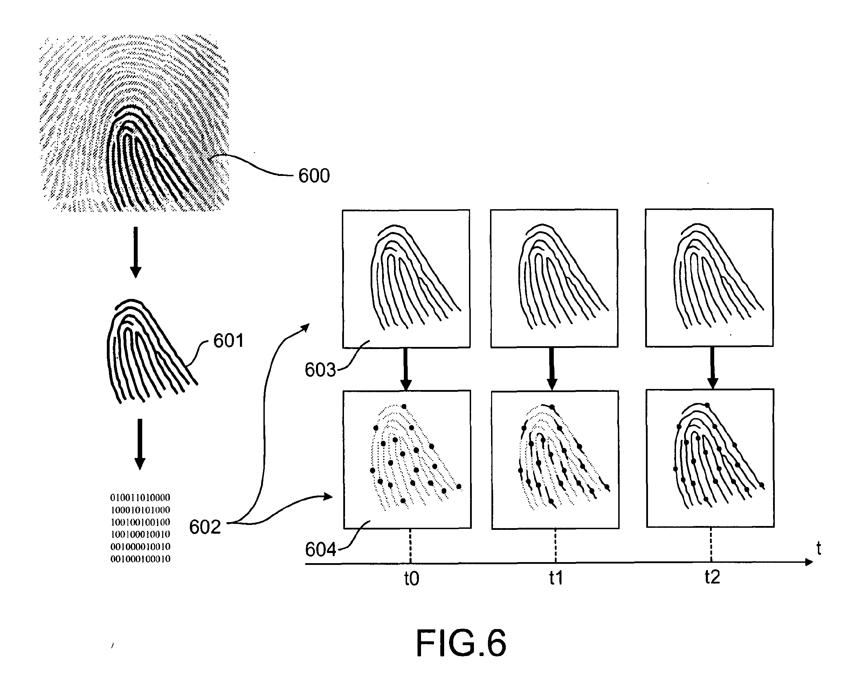

La figure 6 illustre un enchaînement d'étapes permettant d'utiliser une cartographie initiale bidimensionnelle des forces locales 600, pour élaborer la cartographie unidimensionnelle des impédances locales et la cartographie unidimensionnelle des forces. Les lignes de crêtes 601 extraites de la cartographie initiale bidimensionnelle des forces locales 600, après numérisation, servent de filtre de mesure 602 pour déterminer les éléments sensibles utiles qui seront utilisés pour élaborer la cartographie unidimensionnelle des forces d'une part 603 et la cartographie unidimensionnelle des impédances 604. Les trois blocs dans la cartographie unidimensionnelle des forces et dans la cartographie unidimensionnelle de l'impédance représentent trois mesures temporelles successives, aux temps t0, t1, t2 par exemple. Il est possible d'utiliser la cartographie unidimensionnelle des forces 603 pour corriger les images successives de la cartographie unidimensionnelle de l'impédance 604.

Le dispositif de reconnaissance d'individu selon l'invention permet une détermination fiable de l'individu à partir de la partie exposée telle son empreinte digitale de manière indépendante de sa sudation. Les dispositifs connus qui se basent sur l'empreinte digitale et les caractéristiques de la sudation utilisent des capteurs qui délivrent des informations relatives aux impédances locales au contact. Mais, il faut disposer de moyens de traitement sophistiqués des données pour séparer les deux informations. Ces moyens de traitement se basent sur des hypothèses sur les variations temporelles des deux types d'informations comme par exemple que l'empreinte digitale est constante dans le temps et que les caractéristiques de la sudation évoluent dans le temps. Par nature, ces dispositifs manquent de fiabilité.

Les dispositifs de reconnaissance individus connus qui utilisent des capteurs délivrant des informations relatives aux forces locales de contact ne pouvaient délivrer des informations que sur l'empreinte digitale. Les caractéristiques de sudation ne pouvaient être obtenues. L'information sur la pulsation cardiaque n'était pas accessible de manière précise. Ces dispositifs ne pouvaient pas avoir de fonction de détection de fraude comme celui de l'invention.

Le dispositif selon l'invention possède des avantages par rapport au dispositif décrit dans le document [7]. En effet le principe utilisé dans le document [7] repose sur une analyse d'image à la fois spatiale et temporelle. Deux images sont capturées à cinq secondes d'intervalle. La première étape sert à déterminer les lignes de crêtes à partir de la seconde image car elle est plus saturée que la première puisque la sudation s'est accrue au cours du temps. Dans la présente invention les lignes de crêtes peuvent être déterminées dès la première image en utilisant comme données brutes les forces locales de contact et pas les impédances locales au contact.

Dans le document [7], les lignes de crêtes sont utilisées comme filtre d'analyse pour transformer une image bidimensionnelle en une courbe unidimensionnelle et obtenir un ensemble de critères caractéristiques du phénomène de sudation. Cette courbe n'est disponible qu'à la fin de l'acquisition ce qui fait que le traitement ne donc pas se faire en temps réel.

Dans le dispositif de l'invention, le filtre de mesure 602 est disponible dès la première image acquise. Le filtrage se fait en temps réel. Les lignes de crêtes peut être utilisée dans des acquisitions d'images subséquentes 604 pour sélectionner des éléments sensibles puisque seuls les informations données par ces éléments sensibles seront utilisées pour l'analyse. Cela permet de limiter le nombre d'éléments sensibles à prendre en compte dans une image et donc d'utiliser plusieurs images pendant un même temps de traitement.

Il est donc globalement facile de suivre avec une meilleure résolution temporelle l'évolution de la sudation ce qui est une amélioration significative pour la mise en oeuvre des algorithmes de traitement tels que décrits dans le document [7].

Dans le document [7], l'information relative à la sudation peut être perturbée voire trompée en faisant varier temporellement la pression du doigt sur le capteur. Dans la présente invention, le caractère constant de la pression peut être contrôlé en vérifiant par exemple, en fin de traitement, que la cartographie bidimensionnelle des forces locales est restée constante. Si ce n'est pas le cas, il suffit de suivre temporellement la cartographie des forces locales 603 pour ajuster en temps réel le filtre de mesure. On utilise alors la dernière image acquise des forces locales de contact.

### REFERENCES CITEES

[1] « Liveness Detection in Fingerprint Recognition Systems », Chapitre 4, pages 22-34, Thèse de Marie Sandström, 10th June 2004, Université de Linköping, Reg Nr : LITH-ISY-EX-3557-2004 ;
[2] FR-A-2 762 389 ;
[3] US-B-5 719 950 ;
[4] US-B-5 737 439 ;
[5] US-A-2003/0072475 ;
[6] WO-A-01/24700 ;
[7] « Determination of vitality from a non-invasive biomedical measurement for use in fingerprint scanners », Reza Derakhshani et al., Pattern Recognition, vol. 36 (2003), pages 383-396;
[8] FR-A-2 762 389;
[9] EP-A- 0 942 259 ;
[10] US-A-4 353 056 ;

## Revendications

1. Dispositif de reconnaissance d'un individu comportant un capteur (1) comportant un réseau d'éléments sensibles (3) doté d'une zone de contact (5) sur laquelle une partie (11) susceptible d'être celle de l'individu à reconnaître est à appliquer, des moyens de mesure (6) reliés aux éléments sensibles (3) pour délivrer des informations relatives aux forces locales de contact exercées par la partie (11) appliquée sur la zone de contact (5) et des moyens de traitement (10) reliés au capteur (1) pour déterminer à partir des forces locales de contact une caractéristique morphologique de l'individu à reconnaître, **caractérisé en ce que** les moyens de mesure (6) délivrent aussi des information relatives à au moins une autre grandeur physique liée au contact choisie parmi la pression globale s'exerçant sur la zone de contact (5) et les impédances locales au niveau de la zone de contact (5), et **en ce que** les moyens de traitement (10) déterminent à partir de cette autre grandeur physique une caractéristique physiologique de l'individu à reconnaître.

2. Dispositif selon la revendication 1, dans lequel la caractéristique morphologique est l'empreinte digitale de l'individu.

3. Dispositif selon l'une des revendications 1 ou 2, dans lequel la caractéristique physiologique est la pulsation cardiaque ou une caractérisation de la sudation.

4. Dispositif selon l'une des revendications précédentes, dans lequel chaque élément sensible (3) comporte une membrane souple (24) dont une déformation est mesurée par détection capacitive.

5. Dispositif selon la revendication 4, dans lequel un élément sensible (3) comporte une paire d'électrodes (22.1, 22.2) utilisée pour la détection capacitive de la déformation, l'une étant fixe (22.1) et l'autre (22.2) étant mobile solidaire de la membrane souple (24).

6. Dispositif selon la revendication 5, dans lequel une des électrodes (22.2) de la paire est subdivisée en deux sous-électrodes (22.2a, 22.2b).

7. Dispositif selon la revendication 6, dans lequel les sous-électrodes (22.2a, 22.2b) sont inter-digitées.

8. Dispositif selon l'une des revendications 1 à 3, dans lequel un élément sensible comporte une ou plusieurs jauges piézorésistives (J).

9. Dispositif selon l'une des revendications 1 à 3, dans lequel un élément sensible comporte deux électrodes (22.2a, 22.2b) solidaires de la membrane souple (24).

10. Dispositif selon l'une des revendications précédentes dans lequel les moyens de mesure comportent un premier moyen de conversion (8.1) relié par une connexion électrique aux éléments sensibles (3) et apte à délivrer les informations relatives aux forces locales de contact,
au moins un second moyen de conversion (8.2) relié aux éléments sensibles soit par l'intermédiaire de ladite connexion électrique, soit directement par une autre connexion électrique et apte à délivrer les informations relatives à l'autre grandeur physique liée au contact.

11. Dispositif selon l'une des revendications 1 à 9, dans lequel les moyens de mesure (6) comportent :
des moyens de multiplexage (7) reliés aux éléments sensibles (3),
un premier moyen de conversion (8.1) relié aux moyens de multiplexage (7) apte à délivrer les informations relatives aux forces locales de contact,
au moins un second moyen de conversion (8.2, 8.3) apte à délivrer les informations relatives à l'autre grandeur physique liée au contact, et
des moyens de commande (9) des moyens de multiplexage (7) pour relier les éléments sensibles (3) au premier moyen de conversion (8.1) ou au second moyen de conversion (8.2, 8.3).

12. Dispositif selon l'une des revendication 10 ou 11, dans lequel le premier moyen de conversion (8.1) comporte un convertisseur (80) pour chaque élément sensible (3), apte à mesurer une variation de capacité due au déplacement de la membrane (24).

13. Dispositif selon la revendication 11, dans lequel, lorsque l'autre grandeur physique correspond aux impédances locales au contact et que l'électrode mobile (22.1) est unitaire, le second moyen de conversion (8.2) comporte un convertisseur (80) pour chaque élément sensible (3) apte à mesurer une variation d'impédance entre l'électrode mobile (22) et la masse.

14. Dispositif selon l'une des revendications 10 ou 11, dans lequel, lorsque l'autre grandeur physique correspond aux impédances locales au contact, et que l'électrode mobile (22) est subdivisée en deux sous-électrodes (22.2a, 22.2b), le second moyen de conversion (8.2) comporte un convertisseur (80) pour chaque élément sensible (3) apte à mesurer une variation d'impédance entre les deux sous-électrodes (22.2a, 22.2b).

15. Dispositif selon la revendication 11, dans lequel, lorsque l'autre grandeur physique correspond aux impédances locales au contact et que les électrodes (22.1, 22.2) de la paire sont unitaires, le second moyen de conversion (8.2) comporte un convertisseur (80) coopérant avec deux éléments sensibles voisins (3, 3') apte à mesurer une variation d'impédance entre les électrodes mobiles (22.2) des deux éléments sensibles voisins (3, 3').

16. Dispositif selon la revendication 11, dans lequel, lorsque l'autre grandeur physique correspond à la pression globale, le second moyen de conversion (8.3) comporte un convertisseur (800) pour l'ensemble des éléments sensibles (3) ou pour un groupe d'éléments sensibles (3), ce convertisseur (800) étant apte à mesurer une variation de capacité globale due au déplacement de la membrane (24) correspondant à l'ensemble des éléments sensibles ou au groupe d'éléments sensibles.

17. Dispositif selon l'une des revendications 11 ou 12, dans lequel, lorsque l'une des électrodes (22.2) est formée de deux sous-électrodes (22.2a, 22.2b), ces dernières, reliées entre elles, sont connectées au premier moyen de conversion (8.1).

18. Dispositif selon l'une des revendication 10 ou 11, dans lequel le premier moyen de conversion (8.1) comporte un convertisseur (80) pour un groupe d'éléments sensibles (3) coopérant avec un multiplexeur local (81) inséré entre le groupe d'éléments sensibles (3) et le convertisseur (80), ce convertisseur (80) étant apte à mesurer une variation de capacité due au déplacement de la membrane (24) correspondant à chaque élément sensible (3) du groupe.

19. Dispositif selon l'une des revendications 10 ou 11, dans lequel, lorsque l'autre grandeur physique correspond aux impédances locales au contact, le second moyen de conversion (8.2) comporte un convertisseur (80) pour un groupe d'éléments sensibles (3) coopérant avec un multiplexeur local (81) inséré entre le groupe d'éléments sensibles (3) et le convertisseur (80), ce convertisseur (80) étant apte à mesurer une variation d'impédance au niveau de chaque élément sensible (3) du groupe.

20. Dispositif selon l'une des revendications 10 à 19, dans lequel le second moyen de conversion (8.2) est confondu avec le premier moyen de conversion (8.3).

21. Dispositif selon l'une des revendications 10 à 20, dans lequel les moyens de multiplexage (7) comportent des interrupteurs (I1, I2) et des inverseurs (INV1, INV2, INV3, INV4).

22. Dispositif selon l'une des revendications 1 à 21, **caractérisé en ce que** la mesure des forces locales permet d'établir une cartographie bidimensionnelle (600) des forces locales, cette cartographie servant de filtre de mesure (602) pour sélectionner des éléments sensibles utiles à prendre en compte pour la mesure de l'autre grandeur physique.

23. Procédé de reconnaissance d'un individu à l'aide d'un capteur comprenant un réseau d'éléments sensibles doté d'une zone de contact pour une partie susceptible d'être une partie de l'individu à reconnaître, comportant les étapes suivantes
mesure à l'aide du réseau d'éléments sensibles des forces locales de contact (S1) s'exerçant lors du contact avec la partie, pour établir une cartographie bidimensionnelle (S2) des forces locales de contact et utilisation de la cartographie pour déterminer une image (S3) de la partie de l'individu à reconnaître,
mesure à l'aide du réseau d'éléments sensibles d'au moins une grandeur choisie parmi :
les impédances locales (S4) au contact s'exerçant lors du contact avec la partie, pour établir une cartographie des impédances locales (S5) et utilisation de la cartographie pour déterminer des caractéristiques de sudation (S6) de la partie en contact avec la zone de contact et
l'intégrale des forces locales de contact pour obtenir une intégrale de la pression (S7) et utilisation de l'intégrale de la pression (S7) pour déterminer une pulsation cardiaque (S8),
utilisation de l'image (S3) de la partie pour détecter si elle correspond à celle de l'individu à reconnaître,
utilisation des caractéristiques de sudation (S6) et/ou de la pulsation cardiaque (S8) pour détecter s'il y a fraude (S9) au niveau de la partie en contact.

24. Procédé selon la revendication 23, dans lequel il consiste à utiliser les caractéristiques de sudation (S6) et/ou de la pulsation cardiaque (S8) pour confirmer l'identité de l'individu déterminée à partir de l'image (S3).

25. Procédé selon l'une des revendications 23 ou 24, dans lequel il consiste à corriger la cartographie des impédances locales (S5) au contact à l'aide de la cartographie bidimensionnelle des forces locales de contact (S2).

26. Procédé selon l'une des revendications 23 à 25, dans lequel la cartographie des impédances locales (S5) est une cartographie bidimensionnelle.

27. Procédé selon l'une des revendications 23 à 26, dans lequel l'intégrale de la pression (S7) est une intégrale bidimensionnelle.

28. Procédé selon l'une des revendications 23 à 27, dans lequel il consiste à sélectionner à l'aide de la cartographie bidimensionnelle des forces locales de contact (S2) des éléments sensibles utiles qui permettent de déterminer la cartographie des impédances locales (S5'), cette cartographie étant une cartographie unidimensionnelle.

29. Procédé selon l'une des revendications 23 à 26 ou 28, dans lequel il consiste à sélectionner à l'aide de la cartographie bidimensionnelle des forces locales de contact (S2) des éléments sensibles utiles qui permettent d'obtenir l'intégrale de la pression (S7'), cette intégrale étant une intégrale unidimensionnelle.

## Claims

1. Device for recognising an individual comprising a sensor (1) comprising a plurality of sensitive members (3) having a contact area (5) on which a portion (11) likely to be that of the individual to be recognised is to be applied, measurement means (6) connected to the sensitive members (3) for supplying information relative to the local contact forces generated by the portion (11) applied on the contact area (5) and processing means (10) connected to the sensor (1) for determining from the local contact forces a morphological characteristic of the individual to be recognised, **characterised in that** the measurement means (6) also supply information relative to at least another physical magnitude related to the contact chosen from among the global pressure that is generated on the contact area (5) and the local impedances at the contact area (5), and **in that** the processing means (10) determine from this other physical magnitude a physiological characteristic of the individual to be recognised.

2. Device according to claim 1, wherein the morphological characteristic is the fingerprint of the individual.

3. Device according to one of claims 1 or 2, wherein the physiological characteristic is the heart beat or a characterisation of the sudation.

4. Device according to one of the preceding claims, wherein each sensitive member (3) comprises a flexible membrane (24), a deformation of which is measured by capacitive detection.

5. Device according to claim 4, wherein a sensitive member (3) comprises a pair of electrodes (22.1, 22.2) used for the capacitive detection of the deformation, one being fixed (22.1) and the other (22.2) being movable, integral with the flexible membrane (24).

6. Device according to claim 5, wherein one of the electrodes (22.2) of the pair is subdivided into two sub-electrodes (22.2a, 22.2b).

7. Device according to claim 6, wherein the sub-electrodes (22.2a, 22.2b) are interdigitated.

8. Device according to one of claims 1 to 3, wherein a sensitive member comprises one or several piezoresistive gauges (J).

9. Device according to one of claims 1 to 3, wherein a sensitive member comprises two electrodes (22.2a, 22.2b) integral with the flexible membrane (24).

10. Device according to one of the preceding claims, wherein the measurement means comprise a first conversion means (8.1) connected by an electrical connection to the sensitive members (3) and suited to supplying information relative to the local contact forces,
at least one second conversion means (8.2) connected to the sensitive members either by means of said electrical connection, or directly by another electrical connection and suited to supplying information relative to the other physical magnitude related to the contact.

11. Device according to one of claims 1 to 9, wherein the measurement means (6) comprise:
multiplexing means (7) connected to the sensitive members (3),
a first conversion means (8.1) connected to the multiplexing means (7) suited to supplying information relative to the local contact forces,
at least one second conversion means (8.2, 8.3) suited to supplying information relative to the other physical magnitude related to the contact, and
means of controlling (9) the multiplexing means (7) to connect the sensitive members (3) to the first conversion means (8.1) or to the second conversion means (8.2, 8.3).

12. Device according to one of claims 10 or 11, wherein the first conversion means (8.1) comprise a converter (80) for each sensitive member (3), suited to measuring a capacity variation due to the movement of the membrane (24).

13. Device according to claim 11, wherein, when the other physical magnitude corresponds to the local impedances to the contact and that the moving electrode (22.1) is unitary, the second conversion means (8.2) comprise a converter (80) for each sensitive member (3) suited to measuring a variation in impedance between the moving electrode (22) and earth.

14. Device according to one of claims 10 or 11, wherein, when the other physical magnitude corresponds to the local impedances to the contact, and that the moving electrode (22) is subdivided into two sub-electrodes (22.2a, 22.2b), the second conversion means (8.2) comprise a converter (80) for each sensitive member (3) suited to measuring a variation in impedance between the two sub-electrodes (22.2a, 22.2b).

15. Device according to claim 11, wherein, when the other physical magnitude corresponds to the local impedances to the contact and that the electrodes (22.1, 22.2) of the pair are unitary, the second conversion means (8.2) comprise a converter (80) cooperating with two neighbouring sensitive members (3, 3') suited to measuring a variation in impedance between the moving electrodes (22.2) of the two neighbouring sensitive members (3, 3').

16. Device according to claim 11, wherein, when the other physical magnitude corresponds to the global pressure, the second conversion means (8.3) comprise a converter (800) for all of the sensitive members (3) or for a group of sensitive members (3), said converter (800) being suited to measuring a global capacity variation due to the movement of the membrane (24) corresponding to all of the sensitive members or to the group of sensitive members.

17. Device according to one of claims 11 or 12, wherein, when one of the electrodes (22.2) is formed of two sub-electrodes (22.2a, 22.2b), said sub-electrodes, connected together, are connected to the first conversion means (8.1).

18. Device according to one of claims 10 or 11, wherein the first conversion means (8.1) comprise a converter (80) for a group of sensitive members (3) cooperating with a local multiplexer (81) inserted between the group of sensitive members (3) and the converter (80), said converter (80) being suited to measuring a capacity variation due to the movement of the membrane (24) corresponding to each sensitive member (3) of the group.

19. Device according to one of claims 10 or 11, wherein, when the other physical magnitude corresponds to the local impedances to the contact, the second conversion means (8.2) comprise a converter (80) for a group of sensitive members (3) cooperating with a local multiplexer (81) inserted between the group of sensitive members (3) and the converter (80), said converter (80) being suited to measuring a variation in impedance at each sensitive member (3) of the group.

20. Device according to one of claims 10 to 19, wherein the second conversion means (8.2) are merged with the first conversion means (8.3).

21. Device according to one of claims 10 to 20, wherein the multiplexing means (7) comprise interrupters (11, 12) and inverters (INV1, INV2, INV3, INV4).

22. Device according to one of claims 1 to 21, **characterised in that** the measurement of local forces makes it possible to establish a two dimensional mapping (600) of the local forces, this mapping serving as measurement filter (602) to select useful sensitive members to take into account for the measurement of the other physical magnitude.

23. Method for recognising an individual by means of a sensor comprising a plurality of sensitive members having a contact area for a portion capable of being a portion of the individual to be recognised, comprising the following steps:
measuring by means of a plurality of sensitive members the local contact forces (S1) that are generated during contact with the portion, to establish a two dimensional mapping (S2) of local contact forces and using the mapping to determine an image (S3) of the portion of the individual to be recognised,
measurement by means of the plurality of sensitive members at least one magnitude chosen from among:
the local impedances (S4) to the contact that are generated during the contact with the portion, to establish a mapping of the local impedances (S5) and using the mapping to determine the sudation characteristics (S6) of the portion in contact with the contact area and
the integral of the local contact forces to obtain an integral of the pressure (S7) and using the integral of the pressure (S7) to determine a heart beat (S8),
using the image (S3) of the portion to detect if it corresponds to that of the individual to be recognised,
using the sudation characteristics (S6) and/or heart beat (S8) to detect if there is fraud (S9) at the portion in contact.

24. Method according to claim 23, wherein it consists in using the sudation characteristics (S6) and/or heart beat (S8) to confirm the identity of the individual determined from the image (S3).

25. Method according to one of claims 23 or 24, wherein it consists in correcting the mapping of the local impedances (S5) to the contact by means of the two dimensional mapping of the local contact forces (S2).

26. Method according to one of claims 23 to 25, wherein the mapping of the local impedances (S5) is a two dimensional mapping.

27. Method according to one of claims 23 to 26, wherein the integral of the pressure (S7) is a two dimensional integral.

28. Method according to one of claims 23 to 27, wherein it consists in selecting by means of the two dimensional mapping the local contact forces (S2) of the useful sensitive members that make it possible to determine the mapping of local impedances (S5'), this mapping being a one dimensional mapping.

29. Method according to one of claims 23 to 26 or 28, wherein it consists in selecting by means of the two dimensional mapping the local contact forces (S2) of the useful sensitive members that make it possible to obtain the integral of the pressure (S7'), this integral being a one dimensional integral.

## Patentansprüche

1. Vorrichtung zur Erkennung von einem Individuum, umfassend einen Sensor (1), der ein Netzwerk aus empfindlichen Elementen (3) umfasst, ausgestattet mit einem Kontaktbereich (5), auf welchen ein Teil (11) anzuwenden ist, der dazu geeignet ist, derjenige von dem zu erkennenden Individuum zu sein, Messmittel (6), die mit den empfindlichen Elementen (3) verbunden sind, um informationen zu liefern, die sich auf lokale Kontaktkräfte beziehen, die von dem auf den Kontaktbereich (5) angewendeten Teil (11) ausgeübt werden, und Verarbeitungsmittel (10), die mit dem Sensor (1) verbunden sind, um, ausgehend von den lokalen Kontaktkräften, eine morphologische Eigenschaft des zu erkennenden Individuums zu bestimmen, **dadurch gekennzeichnet, dass** die Messmittel (6) ebenfalls informationen liefern, die sich auf wenigstens eine andere physikalische Größe beziehen, die mit dem Kontakt verbunden ist, ausgewählt aus dem Gesamtdruck, der auf den Kontaktbereich (5) ausgeübt wird, und den lokalen Impedanzen auf dem Niveau des Kontaktbereich (5), und dass die Verarbeitungsmittel (10), ausgehend von dieser anderen physikalischen Größe, eine physiologische Eigenschaft des zu erkennenden Individuums bestimmen.

2. Vorrichtung nach Anspruch 1, wobei die morphologische Eigenschaft der Fingerabdruck des Individuums ist.

3. Vorrichtung nach einem der Ansprüche 1 oder 2, wobei die physiologische Eigenschaft der Herzschlag oder eine Schweiß-Eigenschaft ist.

4. Vorrichtung nach einem der vorhergehenden Ansprüche, wobei jedes empfindliche Element (3) eine flexible Membran (24) umfasst, deren Verformung durch kapazitive Detektion gemessen wird.

5. Vorrichtung nach Anspruch 4, wobei ein empfindliches Element (3) ein Paar von Elektroden (22.1, 22.2) umfasst, das für die kapazitive Detektion der Verformung verwendet wird, von denen die eine (22.1) ortsfest ist und die andere (22.2) zusammen mit der flexiblen Membran (24) beweglich ist.

6. Vorrichtung nach Anspruch 5, wobei eine von den Elektroden (22.2) von dem Paar in zwei Unter-Elektroden (22.2a, 22.2b) unterteilt ist.

7. Vorrichtung nach Anspruch 6, wobei die Unter-Elektroden (22.2a, 22.2b) ineinander verzahnt sind.

8. Vorrichtung nach einem der Ansprüche 1 bis 3, wobei ein empfindliches Element eine oder mehrere piezoresistive Messeinrichtungen (J) umfasst.

9. Vorrichtung nach einem der Anspruche 1 bis 3, wobei ein empfindliches Element zwei Elektroden (22.2a, 22.2b) umfasst, die einstückig mit der flexiblen Membran (24) ausgebildet sind.

10. Vorrichtung nach einem der vorhergehenden Ansprüche, wobei die Messmittel ein erstes Umwandlungsmittel (8.1) umfassen, welches durch eine elektrisch Verbindung mit den empfindlichen Elementen (3) verbunden ist, und dazu geeignet ist, die Informationen zu liefern, die sich auf die lokalen Kontakt-Kräfte beziehen, und
wenigstens ein zweites Umwandlungsmittel (8.2) umfassen, welches mit den empfindlichen Elementen entweder vermittels der elektrischen Verbindung, oder direkt durch eine andere elektrische Verbindung verbunden ist, und dazu geeignet ist, die Informationen zu liefern, die sich auf die andere mit dem Kontakt verbundene physikalische Größe beziehen.

11. Vorrichtung nach einem der Ansprüche 1 bis 9, wobei die Messmittel (6) umfassen:
Multiplexmittel (7), die mit den empfindlichen Elementen (3) verbunden sind,
ein erstes Umwandlungsmittel (8.1), welches mit dem Multiplexmitteln (7) verbunden und dazu geeignet ist, die Informationen zu liefern, die sich auf die lokalen Kontakt-Kräfte beziehen,
wenigstens ein zweites Umwandlungsmittel (8.2, 8.3), das dazu geeignet ist, die Informationen zu liefern, die sich auf die andere mit dem Kontakt verbundene physikalische Größe beziehen, und
Steuer/Regel-Mittel (9) für die Multiplexmittel (7), um die empfindlichen Elemente (3) mit dem ersten Umwandiungsmittel (8.1) oder mit dem zweiten Umwandlungsmittel (8.2, 8.3) zu verbinden.

12. Vorrichtung nach einem der Ansprüche 10 oder 11, wobei das erste Umwandlungsmittel (8.1) einen Wander (80) für jedes empfindliche Element (3) umfasst, der dazu geeignet ist, eine Variation der Kapazität aufgrund der Verlagerung der Membran (24) zu messen.

13. Vorrichtung nach Anspruch 11, wobei dann, wenn die andere physikalisch Größe den lokalen Kontakt-Impedanzen entspricht, und die mobile Elektrode (22.1) einheitlich ist, das zweite Umwandlungsmittel (8.2) einen Wandler (80) für jedes empfindliche Elemente (3) umfasst, der dazu geeignet ist, eine Variation der Impedanz wischen der mobilen Elektroden (22) und der Masse zu messen.

14. Vorrichtung nach einem der Anspruche 10 oder 11, wobei, dann, wenn die andere physikalische Größe den lokalen Kontakt-Impedanzen entspricht, und die mobile Elektrode (22) in zwei Unter-Elektroden (22.2a, 22.2b) unterteilt ist, das zweite Umwandlungsmittel (8.2) einen Wandler (80) für jedes empfindliche Element (3) umfasst, der dazu geeignet ist, eine Variation in der Impedanz zwischen den zwei Unter-Elektroden (22.2a, 22.2b) zu messen.

15. Vorrichtung nach Anspruch 11, wobei dann, wenn die andere physikalische Größe den lokalen Kontakt-Impedanzen entspricht, und die Elektroden (22.1, 22.2) von dem Paar einheitlich sind, das zweite Umwandlungsmittel (8.2) einen Wandler (80) umfasst, der mit zwei benachbarten empfindlichen Elementen (3, 3') zusammenwirkt, und der dazu geeignet ist, eine Variation der Impedanz zwischen den beweglichen Elektroden (22.2) der zwei benachbarten empfindlichen Elemente (3, 3') zu messen.

16. Vorrichtung nach Anspruch 11, wobei dann, wenn die andere physikalische Größe dem Gesamtdruck entspricht, das zweite Umwandlungsmtttel (8.3) einen Wandler (800) für die Gesamtheit der empfindlichen Elemente (3) oder für eine Gruppe von empfindliche Elementen (3) umfasst, wobei der Wandler (800) dazu geeignet ist, eine Variation in der Gesamt-Kapazität aufgrund der Verlagerung der Membran (24) entsprechend der Gesamtheit der empfindliche Elemente oder der Gruppe von empfindlichen Elementen zu messen.

17. Vorrichtung nach einem der Ansprüche 11 oder 12, wobei dann, wenn die eine der Elektroden (22.2) aus zwei Unter-Elektroden (22.2a, 22.2b) gebildet ist, diese letzteren, die miteinander verbunden sind, mit dem ersten Umwandlungsmittel (8.1) verbunden sind.

18. Vorrichtung nach einem der Ansprüche 10 oder 11, wobei das erste Umwandlungsmittel (8.1) einen Wandler (80) für eine Gruppe von empfindlichen Elementen (3) umfasst, die mit einem Iokalen Multiplexer (81) zusammenwirken, der zwischen die Gruppe von empfindlichen Elementen (3) und dem Wandler (80) eingesetzt ist, wobei der Wandler (80) dazu geeignet ist, eine Variation in der Kapazität aufgrund der Verlagerung der Membran (24) entsprechend jedem empfindlichen Element (3) der Gruppe zu messen.

19. Vorrichtung nach einem der Anspruche 10 oder 11, wobei dann, wenn die andere physikalische Größe den lokalen Kontakt-Impedanzen entspricht, das zweite Umwandlungsmittel (8.2) einen Wandler (80) für eine Gruppe von empfindlichen Elementen (3) umfasst, die mit einem lokalen Multiplexer (81) zusammenwirken, der zwischen die Gruppe von empfindlichen Elementen (3) und dem Wandler (80) eingesetzt ist, wobei der Wandler (80) dazu geeignet ist, eine Variation in der Impedanz auf dem Niveau von jedem empfindlichen Element (3) der Gruppe zu messen.

20. Vorrichtung nach einem der Ansprüche 10 bis 19, wobei das zweite Umwandlungsmittel (8.2) mit dem ersten Umwandlungsmittel (8.3) zusammenfällt.

21. Vorrichtung nach einem der Ansprüche 10 bis 20, wobei die Multiplexmittel (7) Unterbrecher (I1, I2) und Umschalter (INV1, INV2, INV3, INV4) umfassen.

22. Vorrichtung nach einem der Ansprüche 1 bis 21, dadurch gekennzeichet, dass die Messung der lokalen Kräfte es ermöglicht, eine zweidimensionale Kartierung (600) der lokalen Kräfte aufzustellen, wobei diese Kartierung als Messfilter (602) dient, um empfindliche Elemente auszuwählen, die nützlich sind, um für die Messung der anderen physikalischen Größe berücksichtigt zu werden.

23. Verfahren zur Erkennung von einem Individuum mithilfe von einem Sensor, der ein Netzwerk von empfindliche Elementen umfasst, ausgestattet mit einem Kontaktbereich für einen Teil, der geeignet ist ein Teil von dem zu erkennenden Individuum zu sein, umfassend die folgenden Schritte
Messung von lokalen Kontakt-Kräften, die beim Kontakt mit dem Teil auftreten, mithilfe von dem Netzwerk von empfindlichen Elementen (S1), um eine zweidimensionale Kartierung der lokalen Kontakt-Kräfte aufzustellen (S2), und Verwendung der Kartierung, um ein Bild von dem Teil des zu erkennenden Individuums zu bestimmen (S3).
Messung, mithilfe des Netzwerks von empfindlichen Elementen, von wenigstens einer Größe, die ausgewählt ist aus:
den lokalen Kontakt-Impedanzen (S4), die bei dem Kontakt mit dem Teil auftreten, um eine Kartierung der lokalen Impedanzen aufzustellen (S5), und Verwendung der Kartierung, um Schweiß-Eigenschaften von dem Teil in Kontakt mit dem Kontaktbereich zu bestimmen (S6), und
dem Integral der lokalen Kontaktkräfte, um ein Integral des Drucks zu erhalten (S7), und Verwendung des Integrals des Drucks (S7), um einen Herzschlag zu bestimmten (S8),
Verwendung des Bildes von dem Teil (S3), um zu erfassen, ob dieser demjenigen des zu erkennenden Individuums entspricht,
Verwendung der Schweiß-Eigenschaften (S6) oder/und des Herzschlags (S8), um zu erfassen, ob auf dem Niveau des Teils in Kontakt ein Betrug vorliegt (S9).

24. Verfahren nach Anspruch 23, wobei es darin besteht, die Schweiß-Eigenschaften (S6) oder/und den Herzschlag (S8) zu verwenden, um die Identität des Individuums zu bestätigen, die auf Grundlage von dem Bild bestimmt wurde (S3).

25. Verfahren nach einem der Ansprüche 23 oder 24 wobei es darin besteht, die Kartierung der lokalen Kontakt-Impedanzen (S5) mithilfe der zweidimensionalen Kartierung der lokalen Kontaktkräfte (S2) zu korrigieren.

26. Verfahren nach einem der Ansprüche 23 bis 25 wobei die Kartierung der lokalen Impedanzen (S5) eine zweidimensionale Kartierung ist.

27. Verfahren nach einem der Anspruche 23 bis 26, wobei das Integral des Drucks (S7) ein zweidimensionales Integral ist.

28. Verfahren nach einem der Ansprüche 23 bis 27 wobei es darin besteht, mithilfe der zweidimensionalen Kartierung der lokalen Kontaktkräfte (S2) nützlich empfindliche Elemente auszuwählen, die ermöglichen, die Kartierung der lokalen Impedanzen (S5') zu bestimmen, wobei diese Kartierung eine eindimensionale Kartierung ist.

29. Verfahren nach einem der Anspruche 23 bis 26 oder 28, wobei es darin besteht, mithilfe der zweidimensionalen Kartierung der lokalen Kontaktkräfte (S2) nützliche empfindliche Element auszuwählen, welche es ermöglichen, das Integral des Drucks (S7') zu erhalten, wobei dieses Integral ein eindimensionales Integral ist.
